(19) Europäisches Patentamt
European Patent Office
Office européen des brevets

(11) EP 2 452 961 B1

(12) **EUROPEAN PATENT SPECIFICATION**

(45) Date of publication and mention of the grant of the patent:
**08.01.2014 Bulletin 2014/02**

(21) Application number: **11188774.1**

(22) Date of filing: **11.11.2011**

(51) Int Cl.:
***C08F 220/12*** *(2006.01)*
***C08F 226/06*** *(2006.01)*
***C09J 7/00*** *(2006.01)*
***C09J 133/06*** *(2006.01)*
***C09J 133/26*** *(2006.01)*
*C08L 33/26* *(2006.01)*
*C08L 39/04* *(2006.01)*
*C08L 39/06* *(2006.01)*

(54) **Pressure-sensitive adhesive composition, pressure-sensitive adhesive layer, and pressure-sensitive adhesive tape or sheet**

Druckempfindliche Klebstoffzusammensetzung, druckempfindliche Klebeschicht und druckempfindliches Klebeband oder druckempfindliche Folie

Composition adhésive sensible à la pression, couche adhésive sensible à la pression et bande ou feuille adhésive sensible à la pression

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.11.2010 JP 2010254296**
**24.08.2011 JP 2011183098**

(43) Date of publication of application:
**16.05.2012 Bulletin 2012/20**

(73) Proprietor: **Nitto Denko Corporation**
**Ibaraki-shi,**
**Osaka 567-8680 (JP)**

(72) Inventors:
- **Niwa, Masahito**
  **Ibaraki-shi, Osaka 567-8680 (JP)**
- **Nakashima, Tooru**
  **Ibaraki-shi, Osaka 567-8680 (JP)**

(74) Representative: **Grünecker, Kinkeldey, Stockmair & Schwanhäusser**
**Leopoldstrasse 4**
**80802 München (DE)**

(56) References cited:
**EP-A1- 1 447 434**
**EP-A1- 2 204 426**
**WO-A1-2006/042782**
**WO-A1-2009/116504**
**WO-A1-2009/129087**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 452 961 B1

**Description**

FIELD OF THE INVENTION

The present invention relates to a pressure-sensitive adhesive composition. More particularly, the invention relates to a pressure-sensitive adhesive composition for forming a pressure-sensitive adhesive layer that can maintain high initial adhesive force and adhesion reliability (particularly, repelling resistance) at the time of bonding and can easily be peeled off and can separate and dismantle a joined part at the time of peeling. Further, the present invention relates to a pressure-sensitive adhesive layer formed from the pressure-sensitive adhesive composition, and to a pressure-sensitive adhesive tape or sheet having the pressure-sensitive adhesive layer.

BACKGROUND OF THE INVENTION

Conventionally, a pressure-sensitive adhesive tape or sheet ("tape or sheet" is hereinafter sometimes referred to as merely "tape" or "sheet") is utilized in various uses. Representative examples of the pressure-sensitive adhesive sheet include an acrylic pressure-sensitive adhesive sheet (acrylic adhesive sheet) having a pressure-sensitive adhesive layer (adhesive layer) formed using an acrylic pressure-sensitive adhesive composition (acrylic adhesive composition).

In recent years, from growing environmental consciousness, resource saving and recycle are increasingly required in fields using the pressure-sensitive adhesive sheet. For example, an acrylic pressure-sensitive adhesive sheet particularly is required to have both excellent adhesiveness and easy peelability to a metal adherend in fields of automobiles, machines, electric appliances, building materials and the like from standpoints of improvement in yield, rework in process flow, recycle, workability and the like.

As an acrylic pressure-sensitive adhesive sheet, for example, an acrylic pressure-sensitive adhesive sheet having a pressure-sensitive adhesive layer formed from a bubble-containing viscoelastic composition which is a viscoelastic composition containing bubbles, hollow microspheres and a surfactant, the surfactant being a fluorine-based compound having an oxy($C_{2-3}$)alkyl group and a fluorinated hydrocarbon group in the molecule, is known as an acrylic pressure-sensitive adhesive composition having high initial adhesive force and adhesion reliability at the time of bonding (see Patent Document 1). The acrylic pressure-sensitive adhesive sheet had the problem that the sheet cannot easily be peeled off when peeling.

Furthermore, as an acrylic pressure-sensitive adhesive sheet, an acrylic pressure-sensitive adhesive sheet having a pressure-sensitive adhesive layer formed from a pressure-sensitive adhesive composition blending 100 parts by weight of an acrylic polymer prepared by copolymerizing an alkyl (meth)acrylate having 4 to 12 carbon atoms in the alkyl moiety as the main monomer component and a carboxyl-containing radically polymerizable monomer in an amount of 0.5 to 20% by weight based on the total weight of the monomers, with 0.5 to 20 parts by weight of an epoxy crosslinking agent and 0.1 to 5 parts by weight of a polyisocyanate compound is known as an acrylic pressure-sensitive adhesive sheet that can easily be peeled off at the time of peeling (see Patent Document 2). The acrylic pressure-sensitive adhesive sheet had the problem that the sheet has poor initial adhesive force and adhesion reliability at the time of bonding.

In addition, a pressure-sensitive adhesive tape which maintains high adhesion force and which can be easily separated/debonded is known. In one embodiment, the adhesive layer of said tape comprises a blowing agent and a monomer mixture or a partially polymerized product of at least one alkyl (meth)acrylate having 2 to 18 carbon atoms in the alkyl moiety, at least one N-hydroxyalkyl(meth)acrylamide monomer and at least one nitrogen-containing monomer (see Patent Document 3). In a preferred embodiment, the blowing agent contains heat-expandable microspheres.

Those acrylic pressure-sensitive adhesive sheets were difficult to achieve both excellent adhesiveness and easy peelability to an adherend.

Patent Document 1: JP-A 2006-22189

Patent Document 2: JP-A 2001-247832

Patent Document 3:EP 2 204 426 A1

SUMMARY OF THE INVENTION

An object of the present invention is to provide a pressure-sensitive adhesive composition for forming a pressure-sensitive adhesive layer that can maintain high initial adhesive force and adhesion reliability (particularly, repelling resistance) at the time of bonding, and can easily be peeled off at the time of peeling from an adherend and can easily separate and dismantle a bonded part.

Another object of the present invention is to provide a pressure-sensitive adhesive composition for forming a pressure-sensitive adhesive layer that, particularly in the case where the adherend is a metal adherend, can maintain high initial adhesive force and adhesion reliability (particularly, repelling resistance) at the time of bonding, and can easily be peeled off at the time of peeling from the adherend and can easily separate and dismantle a bonded part.

In order to solve the foregoing problem, the present inventors made extensive and intensive investigations. As a result, they found that a pressure-sensitive adhesive composition for forming a pressure-sensitive adhesive layer, which the composition comprises; a monomer mixture comprising the following (a1), (a2) and (a3) or partially polymerized product thereof; and thermal-expandable fine particles, can provide a pressure-sensitive adhesive composition for forming a pressure-sensitive adhesive layer, which the layer exhibits high initial adhesive force and adhesion reliability (particularly, repelling resistance) at the time of bonding, and can easily be lowered its adhesive force by heat and can easily be separated and dismantled when separating and dismantling a bonded part. Consequently, they have accomplished the present invention.

(a1): Alkyl (meth)acrytate monomer having 4 to 12 carbon atoms in its alkyl moiety and having a glass transition temperature when formed into a homopolymer of lower than 0°C.
(a2): Monomer having at least one nitrogen atom and one ethylenically unsaturated bond in its molecule.
(a3): Monomer having one ethylenically unsaturated bond in its molecule and having a glass transition temperature when formed into a homopolymer of 0°C or higher (excluding (a2) above).

Accordingly, the present invention provides a pressure-sensitive adhesive composition comprising: a monomer mixture comprising the following (a1), (a2) and (a3) or partially polymerized product thereof; and thermal-expandable fine particles:

(a1): alkyl (meth)acrylate monomer having 4 to 12 carbon atoms in its alkyl moiety and having a glass transition temperature when formed into a homopolymer of lower than 0°C;
(a2): monomer having at least one nitrogen atom and one ethylenically unsaturated bond in its molecule; and
(a3): monomer having one ethylenically unsaturated bond in its molecule and having a glass transition temperature when formed into a homopolymer of 0°C or higher (excluding (a2) above).

The pressure-sensitive adhesive composition according to the present invention, it is preferred that, in the monomer mixture, the content of the (a1) is 50 to 80% by weight, the content of the (a2) is 5 to 40% by weight, and the content of the (a3) is 5 to 40% by weight, based on the total weight (100% by weight) of (a1), (a2) and (a3).

The pressure-sensitive adhesive composition according to the present invention, it is preferred that the (a2) is at least one monomer selected from the group consisting of dimethyl acrylamide, N-vinyl pyrrolidone and N-vinyl caprolactam.

The pressure-sensitive adhesive composition according to the present invention, it is preferred that the (a3) is a (meth)acrylate monomer having a glass transition temperature when formed into a homopolymer of 0°C or higher and having a structure that a (meth)acryloyloxy group is bonded with a tertiary carbon atom; or a (meth)acrylate monomer having a glass transition temperature when formed into a homopolymer of 0°C or higher and having a structure that a (meth)acryloyloxy group is bonded with a carbon atom constituting a ring of a monocyclic or polycyclic alicyclic hydrocarbon.

The pressure-sensitive adhesive composition according to the present invention, it is preferred that the (a3) is at least one monomer selected from the group consisting of tert-butyl (meth)acrylate, cyclohexyl (meth)acrylate, isobornyl (meth)acrylate, 1,4-cyclohexanedimethanol mono(meth)acrylate and dicyclopentanyl (meth)acrylate.

The pressure-sensitive adhesive composition according to the present invention, it is preferred that the monomer mixture does not substantially contain a carboxyl group-containing monomer.

The pressure-sensitive adhesive composition according to the present invention preferably further comprises a monomer having at least two ethylenically unsaturated bonds in its molecule.

Further, the present invention provides a pressure-sensitive adhesive layer formed from the above pressure-sensitive adhesive composition.

Further, the present invention provides a pressure-sensitive adhesive tape or sheet comprising the above pressure-sensitive adhesive layer.

Due to the above constitution, the pressure-sensitive adhesive composition of the present invention can provide a pressure-sensitive adhesive layer that can maintain high initial adhesive force and adhesion reliability (particularly, repelling resistance) at the time of bonding, can easily be peeled off at the time of peeling from an adherend and can easily separate and dismantle a bonded part. Particularly, the pressure-sensitive adhesive composition of the present invention can provide a pressure-sensitive adhesive layer that, with respect to a metal adherend, has high initial adhesive force and adhesion reliability (particularly, repelling resistance) at the time of bonding, decreases the adhesive force by heat at the time of separating and dismantling the bonded part, and therefore can easily separate and dismantle the

bonded part.

BRIEF DESCRIPTION OF THE DRAWINGS

Fig. 1 is a schematically cross-sectional view showing a first step of Preparation Example 1.
Fig. 2 is a schematically cross-sectional view showing a second step of Preparation Example 1.
Fig. 3 is a schematically cross-sectional view showing a third step of Preparation Example 1.
Fig. 4 is a schematically cross-sectional view showing a pressure-sensitive adhesive sheet obtained by Preparation Example 1.

DESCRIPTION OF REFERENCE NUMERALS AND SIGNS

1a First step of Preparation Example 1
1b Second step of Preparation Example 1
1c Third step of Preparation Example 1
1d Pressure-sensitive adhesive sheet obtained by Preparation Example 1
11 Thermal-expandable fine particle-containing pressure-sensitive adhesive composition layer
12 Release film (Separator)
13 Thermal-expandable fine particle-containing pressure-sensitive adhesive layer
14 Active energy ray
15 Pressure-sensitive adhesive sheet

MODE FOR CARRYING OUT THE INVENTION

(Pressure-sensitive adhesive composition)

The pressure-sensitive adhesive composition (adhesive composition) of the present invention comprises: at least a monomer mixture comprising at least the following (a1), (a2) and (a3) or partially polymerized product thereof; and thermal-expandable fine particles.

(a1): Alkyl (meth)acrylate monomer having from 4 to 12 carbon atoms in its alkyl moiety and having a glass transition temperature when formed into a homopolymer of lower than 0°C.
(a2): Monomer having at least one nitrogen atom and one ethylenically unsaturated bond in its molecule.
(a3): Monomer having one ethylenically unsaturated bond in its molecule and having a glass transition temperature when formed into a homopolymer of 0°C or higher (excluding (a2) above).

The term "pressure-sensitive adhesive composition" includes the meaning of "a composition for forming a pressure-sensitive adhesive". The term "monomer mixture" means "a mixture of only monomer components". Furthermore, a pressure-sensitive adhesive composition of the present invention is sometimes referred to as "a thermal-expandable fine particle-containing pressure-sensitive adhesive composition".

In the present invention, the term "ethylenically unsaturated bond" means a radically polymerizable carbon-carbon double bond. A group having the ethylenically unsaturated bond is not particularly limited, but examples thereof include a vinyl group, a vinylidene group, an allyl group and a (meth)acryloyl group. In the present invention, the term "monofunctional" means to have one ethylenically unsaturated bond in its molecule, and the term "polyfunctional" means to have at least two ethylenically unsaturated bonds in its molecule.

The term "glass transition temperature (Tg) when formed into a homopolymer" means "a glass transition temperature (Tg) of a homopolymer of the monomer", and means a glass transition temperature (Tg) of a polymer formed using only a certain monomer (sometime referred to as a "monomer X") as a monomer component. Specifically, numeral values of Tg of respective homopolymers are shown in Polymer Handbook (third edition, John Wiley & Sons, Inc., 1989). As for homopolymers that are not described in this literature, values obtained, for example, by the following method are taken as the respective glass transition temperatures (Tg). First, into a reactor equipped with a thermometer, a stirrer, a nitrogen introduction pipe and a reflux cooling tube, 100 parts by weight of a monomer X, 0.2 parts by weight of 2,2'-azobisisobutyronitrile and 200 parts by weight of ethyl acetate as a polymerization solvent are introduced, and the resulting mixture is stirred for 1 hour while introducing nitrogen gas. After thus removing oxygen in a polymerization

system, the mixture is heated to 63°C and allowed to react for 10 hours. Subsequently, the reaction system is cooled to room temperature, to thereby obtain a homopolymer solution having a solid content concentration of 33% by weigh. The homopolymer solution is cast on a release liner and dried, to thereby provide a test sample (sheet-like homopolymer) having a thickness of about 2 mm. About 1 to 2 mg of the test sample is weighed on an aluminum-made open cell and Reversing Heat Flow (specific heat component) behaviors of the homopolymer are obtained at a temperature-rising rate of 5°C/min in a nitrogen atmosphere of 50 ml/min using a temperature-modulated DSC (trade name: Q-2000, manufactured by TA Instruments). In accordance with JIS K-7121, the temperature of the point at which a line equidistant in a vertical axis direction from lines which extend a base line at a low temperature side of Reversing Heat Flow obtained and a base line at a high temperature side thereof intersects with a curve of a stepwise changed part of the glass transition is taken as a glass transition temperature (Tg) when formed into a homopolymer.

The monomer mixture or its partially polymerized product is an essential component in the pressure-sensitive adhesive composition. The proportion of the monomer mixture or its partially polymerized product in the pressure-sensitive adhesive composition is not particularly limited, but is preferably 33% by weight or more (for example, 33 to 91% by weight), and more preferably 40% by weight or more (for example, 40 to 87% by weight), based on the total weight (100% by weight) of the thermal-expandable fine particle-containing pressure-sensitive adhesive composition.

The (a1) is an alkyl (meth)acrylate monomer having from 4 to 12 carbon atoms in its alkyl moiety, and having a glass transition temperature when formed into a homopolymer of lower than 0°C, Furthermore, the (a1) is a monomer having one (meth)acryloyl group in its molecule, and a monomer having one ethylenically unsaturated bond in its molecule. The (a1) is a so-called monofunctional monomer.

Examples of the (a1) include the compounds shown in Table 1 below. In the monomer mixture, the (a1) may be contained alone or in combination of two or more thereof.

TABLE 1

| (a1) | Glass transition temperature when formed into homopolymer (°C) |
|---|---|
| n-Butyl acrylate | -54 |
| sec-Butyl acrylate | -22 |
| 1,3-Dimethylbutyl acrylate | -15 |
| 2-Ethylbutyl acrylate | -50 |
| 2-Ethylhexyl acrylate | -50 |
| 2-Ethylhexyl methacrylate | -10 |
| n-Octyl acrylate | -65 |
| n-Octyl methacrylate | -20 |
| n-Nonyl acrylate | -58 |
| Lauryl acrylate | -3 |
| Lauryl methacrylate | -65 |

Of those, the (a1) is more preferably an alkyl (meth)acrylate monomer having from 4 to 12 carbon atoms in its alkyl moiety and having a glass transition temperature when formed into a homopolymer of lower than -20°C, and further preferably an alkyl (meth)acrylate monomer having from 4 to 12 carbon atoms in the alkyl moiety and having a glass transition temperature when formed into a homopolymer of lower than -40°C.

Specifically, preferred examples of the (a1) include n-butyl acrylate, sec-butyl acrylate, 2-ethylbutyl acrylate, 2-ethylhexyl acrylate, n-octyl acrylate, n-octyl methacrylate, n-nonyl acrylate, lauryl acrylate and lauryl methacrylate, and more preferred examples of the (a1) include n-butyl acrylate and 2-ethylhexyl acrylate.

In the monomer mixture, the content of the (a1) in the total amount (100% by weight) of (a1), (a2) and (a3) is not particularly limited. However, the (a1) is a main monomer component, and the content thereof is preferably 50 to 80% by weight, more preferably 55 to 75% by weight, and further preferably 60 to 70% by weight. Where the content of the (a1) is less than 50% by weight, there may be some cases of causing disadvantage that adhesive characteristics such as initial bonding property (initial adhesive force) under the environment at ordinary temperature (23±2°C) or low temperature (for example, -40 to -10°C) is not sufficiently exerted on the pressure-sensitive adhesive layer formed from the pressure-sensitive adhesive composition of the present invention. On the other hand, when the content of the (a1) exceeds 80% by weight, there may be some cases of causing lack of adhesive force, repelling resistance, cohesive property and the like due to lack of the amounts of (a2) and (a3).

The (a2) is a monomer having at least one nitrogen atom and one ethylenically unsaturated bond in its molecule. The (a2) has one ethylenically unsaturated bond in its molecule, and therefore is a monofunctional monomer. The (a2) is a copolymerizable component of (a1). In the monomer mixture, the (a2) may be contained alone or in combination of two or more thereof.

The (a2) is not particularly limited, and is preferably at least one monomer selected from the group consisting of N-vinyl cyclic amide and (meth)acrylamides.

Examples of the N-vinyl cyclic amide include the compounds represented by the following formula (1):

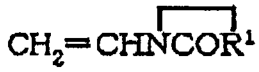

(1)

wherein $R^1$ represents a divalent organic group.

In the Formula (1), $R^1$ is preferably a saturated hydrocarbon group, and more preferably an alkylene group with 3 to 5 carbon atoms.

Examples of the N-vinyl cyclic amide include N-vinyl-2-pyrrolidone, N-vinyl-2-piperidone, N-vinyl-3-morpholine, N-vinyl-2-caprolactam, N-vinyl-1,3-oxazin-2-one, N-vinyl-3,5-morpholinedione, N-vinylpyridine, N-vinylpyrimidine, N-vinylpiperazine and N-vinylpyrrole.

Examples of the (meth)acrylamides include (meth)acrylamide, N-alkyl (meth)acryamide and N,N-dialkyl (meth) acrylamide. Examples of the N-alkyl (meth)acrylamide include N-ethyl (meth)acrylamide, N-n-butyl (meth)acrylamide and N-octyl acrylamide. Examples of the (meth)acrylamides further include amino group-containing (meth)acrylamides such as dimethylaminoethyl (meth)acrylamide and diethylaminoethyl (meth)acrylamide. Examples of the N,N-dialkyl (meth)acrylamide include N,N-dimethyl (meth)acrylamide, N,N-diethyl (meth)acrylamide, N,N-dipropyl (meth)acrylamide, N,N-diisopropyl (meth)acrylamide, N,N-di(n-butyl) (meth)acrylamide and N,N-di(t-butyl) (meth)acrylamide.

Examples of the (meth)acrylamides further include cyclic (meth)acrylamides having N-acryloyl group, such as (meth)acryloylmorpholine, (meth)acryloylpyrrolidone and (meth)acryloylpyrrolizine.

Examples of the (meth)acrylamides further include N-hydroxyalkyl (meth)acrylamide monomers having a hydroxyalkyl group with 1 to 4 carbon atoms. Examples of the N-hydroxyalkyl (meth)acrylamide monomers having a hydroxyalkyl group with 1 to 4 carbon atoms include the compounds represented by the following formula (2):

$$CH_2\text{-}C(R^2)CONR^3R^4 \qquad (2)$$

wherein $R^2$ represents hydrogen atom or a methyl group, $R^3$ represents a hydroxyalkyl group with 1 to 4 carbon atoms, and $R^4$ represents hydrogen atom or a saturated hydrocarbon group with 1 to 10 carbon atoms.

In the formula (2), $R^3$ may have a linear chain structure, and may have a branched chain structure.

Examples of the N-hydroxyalkyl (meth)acrylamide monomer having a hydroxyalkyl group with I to 4 carbon atoms include N-methylol (meth)acrylamide, N-(2-hydroxyethyl)acrylamide, N-(2-hydroxyethyl)methacrylamide, N-(2-hydroxypropyl)acrylamide, N-(2-hydroxypropyl)methacrylamide, N-(1-hydroxypropyl)acrylamide, N-(1-hydroxypropyl) methacrylamide, N-(3-hydroxypropyl)acrylamide, N-(3-hydroxypropyl)methacrylamide, N-(2-hydroxybutyl)acrylamide) N-(2-hydroxybutyl)methacrylamide, N-(3-hydroxybutyl)acrylamide, N-(3-hydroxybutyl)methacrylamide, N-(4-hydroxybutyl)acrylamide, N-(4-hydroxybutyl)methacrylamide and N-methyl-N-2-hydroxyethyl (meth)acrylamide.

Further, examples of the (a2) other than the above N-vinyl cyclic amide and (meth)acrylamides include: monomers having an amino group, such as aminoethyl (meth)acrylate, N,N-dimethylaminoethyl (meth)acrylate and N,N-dimethylaminopropyl (meth)acrylate; monomers having a maleimide skeleton, such as N-cyclohexylmaleimide and N-phenylmaleimide; itaconimide monomers such as N-methylitaconimide, N-ethylitaconimide, N-butylitaconimide, N-2-ethylhexylitaconimide, N-laurylitaconimide and N-cyclohexylitaconimide; cyanoacrylate monomers such as acrylonitrile and methacrylonitrile; and succinimide monomers such as N-(meth)acryloyloxymethylene succinimide, N-(meth)acryloyl-6-oxyhexamethylene succinimide and N-(meth)acryloyl-8-oxyoctamethylene succinimide.

From the standpoint of the easiness of achieving a fine balance between adhesion reliability and flexibility of the pressure-sensitive adhesive layer formed from the pressure-sensitive adhesive composition of the present invention, the (a2) is preferably N-vinyl-2-pyrrolidone, N-vinyl-2-caprolactam, (meth)acrylamide having one or two N-alkyl groups with I to 4 (more preferably 1 or 2) carbon atoms (for example, N,N-dialkyl acrylamide such as N,N-diethylacrylamide or N,N-dimethylacrylamide), N-(2-(hydroxyethyl)acrylamide, N-(2-hydroxyethyl)methacrylamide, N-methylol (meth)acrylamide, and N-(3-hydroxypropyl)acrylamide. Particularly, the (a2) is preferably N,N-dimethylacrylamide, N-vinyl-2-pyrrolidone and N-vinyl-2-caprolactam, and most preferably N-vinyl-2-pyrrolidone and N-vinyl-2-caprolactam,

In the monomer mixture, the content of the (a2) in the total amount (100% by weight) of (a1), (a2) and (a3) is not particularly limited, but is preferably 5 to 40% by weight, more preferably 7 to 35% by weight, and further preferably

10 to 30% by weight. Where the content of the (a2) is less than 5% by weight, there may be some cases of causing disadvantages that, in the pressure-sensitive adhesive layer formed from the pressure-sensitive adhesive composition or a pressure-sensitive adhesive sheet having the pressure-sensitive adhesive layer, processability is deteriorated, adhesion reliability is difficult to be exerted, or the like. On the other hand, where the content of the (a2) exceeds 40% by weight, there may be some cases of causing disadvantages that, in the pressure-sensitive adhesive layer formed from the pressure-sensitive adhesive composition or a pressure-sensitive adhesive sheet having the pressure-sensitive adhesive layer, flexibility is decreased, tackiness is decreased, or the like. The decrease in flexibility may lead to the decrease in adhesion reliability (particularly, repelling resistance).

The (a3) is a monomer having one ethylenically unsaturated bond in its molecule and having a glass transition temperature when formed into a homopolymer of 0°C or higher. The (a3) is not included in the above (a2). The (a3) has one ethylenically unsaturated bond in its molecule, and is therefore a monofunctional monomer. In the monomer mixture, the (a3) may be contained alone or in combination of two or more thereof.

Example of the (a3) in the monomer mixture include the compounds shown in Table 2 below.

TABLE 2

| (a3) | Glass transition temperature when formed into homopolymer (°C) |
|---|---|
| tert-Butyl acrylate | 43 |
| tert-Butyl methacrylate | 118 |
| Cyclohexyl acrylate | 19 |
| Cyclohexyl methacrylate | 83 |
| Isobornyl acrylate | 94 |
| Isobornyl methacrylate | 110 |
| Furfuryl acrylate | 48 |
| Dicyclopentanyl acrylate | 120 |
| 1,4-Cyclohexanedimethanol monoacrylate | 9.8 |
| Dicyclopentenyloxyethyl acrylate | 10-15 |

Of those, the (3a) is more preferably a monomer having one ethylenically unsaturated bond in the molecule and having a glass transition temperature when formed into a homopolymer of 10°C or higher (excluding the above (2a)), and further preferably a monomer having one ethylenically unsaturated bond in the molecule and having a glass transition temperature when formed into a homopolymer of 15°C or higher (excluding the above (2a)).

The (3a) does not have a structure causing an interaction with an adherend in its molecule (for example, acidic group), and is capable of adjusting elasticity and flexibility of a pressure-sensitive adhesive layer formed from a pressure-sensitive adhesive composition. From this standpoint, the (3a) is preferably "a (meth)acrylate monomer having a structure that a (meth)acryloyloxy group is bonded with a tertiary carbon atom, and has a glass transition temperature when formed into a homopolymer of 0°C or higher" and "a (meth)acrylate monomer having a structure that a (meth)acryloyloxy group is bonded with a carbon atom constituting a ring of a monocyclic or polycyclic alicyclic hydrocarbon, and has a glass transition temperature when formed into a homopolymer of 0°C or higher".

Specifically, the (3a) is preferably tert-butyl acrylate, tert-butyl methacrylate, cyclohexyl acrylate, cyclohexyl methacrylate, isobornyl acrylate, isobornyl methacrylate, dicyclopentanyl acrylate, dicyclopentanyl methacrylate, furfuryl acrylate, 1,4-cyclohexanedimethanol monoacrylate, 1,4-cyclohexanedimethanol monomethacrylate, dicyclopentenyloxyethyl acrylate and dicyclopentenyloxyethyl methacrylate; more preferably, tert-butyl (meth)acrylate, cyclohexyl {meth) acrylate, isobornyl (meth)acrylate, 1,4-cyclohexanedimethanol mono(meth)acrylate, dicyclopentenyloxyethyl (meth)acrylate and dicyclopentanyl (meth)acrylate; and, from the standpoint of polymerizability, the (3a) is further preferably tert-butyl acrylate, cyclohexyl acrylate, isobornyl acrylate, dicyclopentanyl acrylate and 1,4-cyclohexane dimethanol monoacrylate. Furthermore, isobornyl acrylate, isobornyl methacrylate and dicyclopentanyl acrylate have high Tg, and are particularly preferred.

In the monomer mixture, the content of the (a3) in the total amount (100% by weight) of (a1), (a2) and (a3) is not particularly limited, but is preferably 5 to 40% by weight, more preferably 7 to 30% by weight, and further preferably 10 to 20% by weight. Where the content of the (a3) is less than 5% by weight, there may be some cases of causing disadvantage that, in the pressure-sensitive adhesive layer formed from the pressure-sensitive adhesive composition or a pressure-sensitive adhesive sheet having the pressure-sensitive adhesive layer, adhesive force to an adherend is

decreased, or the like. On the other hand, the content of the (a3) exceeds 40% by weight, there may be some cases of causing disadvantages that, in the pressure-sensitive adhesive layer formed from the pressure-sensitive adhesive composition or a pressure-sensitive adhesive sheet having the pressure-sensitive adhesive layer, flexibility is decreased, tackiness is decreased, or the like. The decrease in flexibility may lead to the decrease in adhesion reliability (particularly, repelling resistance).

The monomer mixture may contain a copolymerizable monomer (a4) together with (a1), (a2) and (a3), unless it impairs the advantageous effects of the pressure-sensitive adhesive composition of the present invention. The (a4) does not include the above (a1), (a2) and (a3) and a polyfunctional monomer described hereinafter. The (a4) is a monofunctional monomer having one ethylenically unsaturated bond in its molecule. In the monomer mixture, the (a4) may be contained alone or in combination of two or more thereof. The content of the (a4) in the monomer mixture is not particularly limited, but is preferably selected in an amount that does not impair the advantageous effects of the present invention.

In the pressure-sensitive adhesive composition of the present invention, the content of (a1) in the monomer mixture is preferably 50 to 80% by weight, the content of (a2) therein is preferably 5 to 40% by weight, and the content of (a3) therein is preferably 5 to 40% by weight, based on the total weight (100% by weight) of (a1), (a2) and (a3), from the standpoints of possibility of providing a pressure-sensitive adhesive layer exerting both: initial adhesive force and adhesive reliability (particularly, repelling resistance) at the time of bonding; and peelability/dismantlability at the time of peeling from an adherend, in high level.

The partially polymerized product of the monomer mixture means a composition in which at least one monomer component in the monomer components contained in the monomer mixture is partially polymerized. The partially polymerized product of the monomer mixture occasionally has a syrup state having viscosity depending on the conversion.

The partially polymerized product of the monomer mixture is obtained by polymerizing a part of monomer components contained in the monomer mixture. For example, the partially polymerized product of the monomer mixture is obtained by irradiating the monomer mixture with an active energy ray (particularly, ultraviolet ray), avoiding the contact with oxygen.

The conversion of the partially polymerized product of the monomer mixture is not particularly limited. From the standpoint of achieving a viscosity suitable for handling and application of the pressure-sensitive adhesive composition of the present invention, the conversion is preferably 2 to 40% by weight, and more preferably 5 to 20% by weight.

The conversion of the partially polymerized product is obtained as follows. A part of a partially polymerized product is sampled and used as a sample. The sample is precisely weighed to obtain its weight, and the weight is taken as "weight of a partially polymerized product before drying". Subsequently, the sample is dried at 130°C for 2 hours, and the sample after drying is precisely weighed to obtain its weight. The weight is taken as "weight of a partially polymerized product after drying". Weight of the sample decreased by drying at 130°C for 2 hours is obtained from the "weight of a partially polymerized product before drying" and the "weight of a partially polymerized product after drying", and the weight is taken as "weight loss" (volatile content, unreacted monomer weight).

From the "weight of a partially polymerized product before drying" and the "weight loss", the conversion of the partially polymerized product (% by weight) is obtained from the following equation.

$$\text{Conversion of partially polymerized product (\% by weight)}$$
$$= [1 - (\text{weight loss}) / (\text{weight of partially polymerized product before drying})] \times 100$$

The pressure-sensitive adhesive composition of the present invention contains at least thermal-expandable fine particles, in addition to the above monomer mixture or partially polymerized product thereof. The thermal-expandable fine particles mean fine particles of which the volume expands by heat. The thermal-expandable fine particles may be contained alone or in combination of two or more thereof in the pressure-sensitive adhesive composition of the present invention.

The thermal-expandable fine particles are not particularly limited, but microencapsulated thermal-expandable fine particles are preferred. Examples of the microencapsulated thermal-expandable fine particles include microspheres formed by incorporating a material which easily gasifies and expands by heating, such as isobutene, propane or pentane, into a shell having elasticity (the microspheres are sometimes referred to as "thermal-expandable microspheres").

The shell of the thermal-expandable microspheres is preferably formed by a thermoplastic material, heat-fusible material, a material burst by thermal expansion, or the like. Examples of the material forming the shell of the thermal-expandable microspheres include vinylidene chloride-acrylonitrile copolymer, polyvinyl alcohol, polyvinyl butyral, polymethyl methacrylate, polyacrylonitrile, polyvinylidene chloride, and polysulfone. The thermal-expandable microspheres are prepared by the conventional methods, such as a coacervation method or an interfacial polymerization

method.

As the thermal-expandable microspheres, commercially available products may be used. The commercially available products of the thermal-expandable microspheres are not particularly limited. Examples of the commercially available products include trade names: Matsumoto Microsphere F-30, Matsumoto Microsphere F-50, Matumoto Microsphere F-80S and Matsumoto Microsphere F-85 (manufactured by Matsumoto Yushi-Seiyaku Co., Ltd.); and trade name: Expancel Du Series (manufactured by Expancel). Of those, the trade name: Expancel 051 Du 40 (manufactured by Expancel) is more preferably used.

The average particle size of the thermal-expandable fine particles is not particularly limited. The average particle size is preferably 1 to 80 μm, and more preferably 3 to 50 μm, from the standpoints of dispersibility and thin layer formability.

In the pressure-sensitive adhesive layer formed from the pressure-sensitive adhesive composition of the present invention, the thermal-expandable fine particles preferably have strength that docs not burst until a volume expansion ratio becomes 5 times or more and particularly 10 times or more, from the standpoint of efficiently leading to decrease of the pressure-sensitive adhesive force by a thermal treatment. In the case of using thermal-expandable fine particles that burst at low volume expansion ratio (for example, thermal-expandable fine particles that burst at a volume expansion ratio of less than 5 times) or unmicroencapsulated thermal expansion agent (thermally expanding agent), even though heat treatment is conducted to the pressure-sensitive adhesive layer formed from the pressure-sensitive adhesive composition, a contact area between the pressure-sensitive adhesive layer and an adherend cannot sufficiently be decreased, and good peelability is difficult to obtain. The volume expansion ratio is obtained by the following formula.

Volume expansion ratio

= (Volume of thermal-expandable microsphere after heating) / (Volume of thermal-expandable microsphere before heating)

In the pressure-sensitive adhesive composition of the present invention, the content of the thermal-expandable fine particles varies depending on the kind thereof, and is not particularly limited. The content of the thermal-expandable fine particles is preferably 10 to 200 parts by weight, more preferably 20 to 125 parts by weight, further preferably 25 to 100 parts by weight, and most preferably 25 to 80 parts by weight, per 100 parts by weight of the monomer mixture. Where the content of the thermal-expandable fine particles is less than 10 parts by weight, the contact area between a pressure-sensitive adhesive layer and an adherend may not sufficiently be decreased by heat treatment in the pressure-sensitive adhesive layer formed from the pressure-sensitive adhesive composition. On the other hand, where the content exceeds 200 parts by weight, cohesive failure may easily occur in the pressure-sensitive adhesive layer formed from the pressure-sensitive adhesive composition.

The pressure-sensitive adhesive composition of the present invention preferably further contains a polymerization initiator such as a thermal polymerization initiator or a photopolymerization initiator, in addition to the monomer mixture or its partially polymerized product, and the thermal-expandable fine particles. When the pressure-sensitive adhesive composition of the present invention contains a polymerization initiator such as a thermal polymerization initiator or a photopolymerization initiator, a curing reaction by heat or an active energy ray can be utilized in forming the pressure-sensitive adhesive layer from the pressure-sensitive composition. As a result, the pressure-sensitive adhesive layer can be obtained by curing the pressure-sensitive adhesive composition in the state that the thermal-expandable fine particles are blended. In other words, the pressure-sensitive adhesive layer having a constitution that the thermal-expandable fine particles are stably contained can easily be obtained from the pressure-sensitive adhesive composition of the present invention. Particularly, the pressure-sensitive adhesive composition preferably contains a photopolymerization initiator as a polymerization initiator as described hereinafter. Therefore, the pressure-sensitive adhesive layer having a constitution that the thermal-expandable fine particles are stably contained can easily be obtained from the pressure-sensitive adhesive composition of the present invention, utilizing a polymerization reaction (photocuring reaction) using an active energy ray. In the pressure-sensitive adhesive composition of the present invention, the polymerization initiator may be contained alone or in combination of two or more thereof.

In particular, the polymerization initiator is preferably a photopolymerization initiator from the standpoint that curing time for forming the pressure-sensitive adhesive layer from the pressure-sensitive adhesive composition can be shortened. Examples of the active energy ray irradiated in utilizing the curing reaction by an active energy ray include ionizing radiations such as α-ray, β-ray, γ -ray, neutron ray and electron ray, and ultraviolet rays. Of those, ultraviolet rays are preferred. Irradiation energy and irradiation time of the active energy ray are not particularly limited, and are appropriately selected from the ranges unless they impair the polymerization reaction.

The photopolymerization initiator is not particularly limited, and examples thereof include benzoin ether type

photopolymerization initiator, acetophenone type photopolymerization initiator, α -ketol type photopolymerization initiator, α-aminoketone type photopolymerization initiator, acylphosphine oxide type photopolymerization initiator, aromatic sulfonyl chloride type photopolymerization initiator, photoactive oxime type photopolymerization initiator, benzoin type photopolymerization initiator, benzyl type photopolymerization initiator, benzophenone type photopolymerization initiator, ketal type photopolymerization initiator, and thioxanthone type photopolymerization initiator.

Specifically, examples of α-hydroxyketone (α-ketol) type photopolymerization initiator include 1-hydroxy-cyclohexyl-phenylketone (trade name: IRGACURE 184, manufactured by BASF Japan), 2-hyeroxy-2-methyl-1-phenyl-propan-1-one (trade name: DAROCURE 1173, manufactures by BASF Japan), and 1-[4-(2-hydroxyethoxy)-phenyl]-2-hydroxy-2-methyl-1-propan-1-one (trade name: IRGACURE 2959, manufactured by BASF Japan). Examples of α-aminoketone type photopolymerization initiator include 2-methyl-1-[4-(methylthio)phenyl]-2-morpholino-propan-1-one (trade name: IRGACURE 907, manufactured by BASF Japan) and 2-benzyl-2-dimethylamino-1-(4-morpholinophenyl)-1-butanone-1 (trade name: IRGACURE 369, manufactured by BASF Japan). Examples of acylphosphine oxide type photopolymerization initiator include 2,4,6-trimethylbenzoyldiphenylphosphine oxide (trade name: LUCIRIN TPO, manufactured by BASF Japan). Examples of benzoin ether type photopolymerization initiator include benzoin methyl ether, benzoin ethyl ether, benzoin propyl ether, benzoin isopropyl ether, benzoin isobutyl ether, 2,2-dimethoxy-1,2-diphenylethan-1-one, and anisol methyl ether. Examples of acetophenone type photopolymerization initiator include 2,2-diethoxyacetophenone, 2,2-dimethoxy-2-phenyl acetophenone, 1-hydroxycyclohexylphenyl ketone, 4-phenoxydichloroacetophenone, and 4-t-butyl-dichloroacetophenone. Examples of aromatic sulfonyl chloride type photopolymerization initiator include 2-naphthalene sulfonyl chloride. Examples of photoactive oxime type photopolymerization initiator include 1-phneyl-1,1-propanedion-2-(o-ethoxycarbonyl)-oxime. Examples of benzoin type photopolymerization initiator include benzoin. Examples of benzyl type photopolymerization initiator include benzyl. Examples of benzophenone type photopolymerization initiator include benzophenone, benzoylbenzoic acid, 3,3'-dimethyl-4-methoxybenzophenone, polyvinylbenzophenone, and α-hydroxycyclohexyl phenyl ketone. Examples of ketal type photopolymerization initiator include benzyl dimethyl ketal and 2,2-dimethoxy-1,2-diphenylethan-1-one (trade name: IRGACURE 651, manufactured by BASF Japan). Examples of thioxanthone type photopolymerization initiator include thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone, and dodecylthioxanthone.

The content of the polymerization initiator in the pressure-sensitive adhesive composition of the present invention varies depending on the kind thereof and is not particularly limited. In the case of the photopolymerization initiator, the content thereof is preferably 0.001 to 5 parts by weight, more preferably 0.01 to 5 parts by weight, and further preferably 0.05 to 3 parts by weight, per 100 parts by weight of the monomer mixture. Where the content of the photopolymerization initiator in the pressure-sensitive adhesive composition of the present invention is less than 0.001 parts by weight, time required for polymerization reaction may become long. On the other hand, where the content the photopolymerization initiator in the pressure-sensitive adhesive composition exceeds 5 parts by weight, a molecular weight of a base polymer in the pressure-sensitive adhesive layer formed may be decreased, leading to occurrence of variation of adhesive characteristic.

The pressure-sensitive adhesive composition of the present invention, preferably further contains a monomer having at least two ethylenically unsaturated bonds in its molecule, from the standpoint of adjusting elasticity and flexibility of the pressure-sensitive adhesive layer or increasing cohesive force of the pressure-sensitive adhesive layer to thereby improve adhesive force. The monomer having at least two ethylenically unsaturated bonds in its molecule is preferably contained also from the standpoint of expandability of the pressure-sensitive adhesive layer formed from the pressure-sensitive adhesive composition. In the present application, the "monomer having at least two ethylenically unsaturated bonds in its molecule" is sometimes referred to as a "polyfunctional monomer".

The (a2) and (a3) above are not included in the polyfunctional monomer.

The polyfunctional monomer is preferably a monomer having at least two ethylenically unsaturated bonds in its molecule, in which at least one ethylenically unsaturated bond is an ethylenically unsaturated bond in a (meth)acryloyl group. In the present application, the "monomer having at least two ethylenically unsaturated bonds in its molecule, in which at least one ethylenically unsaturated bond is an ethylenically unsaturated bond in a (meth)acryloyl group" is sometimes referred to as a "Polyfunctional (meth)acrylate". In the polyfunctional (meth)acrylate, all of the ethylenically unsaturated bonds in the molecule may be ethylenically unsaturated bonds in (meth)acryloyl groups.

Examples of the polyfunctional (meth)acrylate include trimethylolpropane tri(meth)acrylate, tetramethylolmethane tetra(meth)acrylate, penthaerythritol di(meth)acrylate, pentaerythritol tri(meth)acrylate, pentaerythritol tetra(meth) acrylate, 1,2-ethyleneglycol di(meth)acrylate, 1,4-butyreneglycol di(meth)acrylate, 1,6-hexanediol di(meth)acrylate, 1,12-dodecanediol di(meth)acrylate, dipentaerythritol monohydroxypenta(meth)acrylate, dipentaerythritol hexa(meth) acrylate, polyethyleneglycol di(meth)acrylate, hexanediol di(meth)acrylate, (poly)ethyleneglycol di(meth)acrytate, (poly) propyleneglycol di(meth)acrylate, neopentylglycol di(meth)acrylate, tetramethylolmethane tri(meth)acrylate, allyl (meth) acrylate, vinyl (meth)acrylate, epoxy acrylate, polyester acrylate, urethane acrylate, and reactive hyperbranched polymers having a plurality of (meth)acryloyl groups at the terminals (for example, trade name: CN2300, CN2301 and CN2320,

manufactured by SARTOMER).

In the pressure-sensitive adhesive composition of the present invention, the content of the polyfunctional monomer is not particularly limited, Specifically, in the case where the pressure-sensitive adhesive composition of the present invention contains the polyfunctional (meth)acrylate, the content of the polyfunctional (meth)acrylate is preferably 5 parts by weight or less (for example, 0.001 to 5 parts by weight), more preferably 3 parts by weight or less (for example, 0.001 to 3 parts by weight), and further preferably 1 part by weight or less (for example, 0.001 to 1 part by weight), per 100 parts by weight of the monomer mixture, When the content of the polyfunctional (meth)acrylate is too large (for example, exceeding 5 parts by weight), flexibility of the pressure-sensitive adhesive layer formed from the pressure-sensitive adhesive composition may be impaired, and this may particularly adversely affect repelling resistance of the pressure-sensitive adhesive layer. On the other hand, when the content of the polyfunctional (meth)acrylate is too small, sufficient cohesive force may not be obtained in the pressure-sensitive adhesive layer formed from the pressure-sensitive adhesive composition, and this may adversely affect adhesion reliability of the pressure-sensitive adhesive layer.

In the pressure-sensitive adhesive composition of the present invention, the polyfunctional monomer (particularly, polyfunctional (meth)acrylate) is preferably contained by appropriately adjusting such that a solvent-insoluble content (gel fraction) of the pressure-sensitive adhesive layer (thermal-expandable fine particle-containing pressure-sensitive adhesive layer) described hereinafter becomes a desired solvent-insoluble content.

As necessary, the pressure-sensitive adhesive composition of the present invention may further contain additives unless it impairs the advantageous effects of the present invention. Examples of the additives include crosslinking agents such as isocyanate type crosslinking agent or epoxy type crosslinking agent; tackifiers such as rosin derivative resin, polyterpene resin, petroleum resin, or oil-soluble phenol resin; plasticizers; fillers; anti-aging agents; and surfactants. The pressure-sensitive adhesive composition may contain two or more additives.

The pressure-sensitive adhesive composition of the present invention is preferably adjusted to have a viscosity suitable for coating (generally, 0.3 to 40 Pa·s as viscosity measured under the condition of measurement temperature at 25°C in the viscosity measurement by B-type viscometer) from the standpoint of its handling property.

The pressure-sensitive adhesive composition of the present invention preferably contains the partially polymerized product of the monomer mixture from the standpoint of obtaining the above viscosity. The pressure-sensitive adhesive composition may further contain a thickening polymer.

A method of preparing the pressure-sensitive adhesive composition of the present invention is not particularly limited. For example, thermal-expanding fine particles, and components added as necessary (for example, the photopolymerization initiator, the polyfunctional monomer such as polyfunctional (meth)acrylate, the additives, and the like) may be blended with the monomer mixture or its partially polymerized product.

The pressure-sensitive adhesive composition of the present invention contains the monomer mixture or its partially polymerized product containing (a2) as a monomer component. Therefore, the pressure-sensitive adhesive composition can provide a pressure-sensitive adhesive layer which can maintain high initial adhesive force and adhesion reliability (particularly, repelling resistance) at the time of bonding, and can be easily peeled off at the time of peeling from an adherent and can easily separate and dismantle a bonded part. Furthermore, the pressure-sensitive adhesive composition can provide a pressure-sensitive adhesive layer having excellent adhesion characteristics. This is because the (a2) contributes to the improvement in adhesive force and cohesive force of the pressure-sensitive adhesive layer formed from the pressure-sensitive adhesive composition of the present invention.

Thus, the pressure-sensitive adhesive composition of the present invention can provide a pressure-sensitive adhesive layer which can exert good adhesive force to the adherend and can easily be peeled off from an adherend by heating, without substantially containing an acidic group-containing monomer (for example, a carboxyl group-containing monomer such as acrylic acid; and monomers containing an acidic group (such as sulfonate group or phosphate group) other than carboxyl group, such as a sulfonate group-containing monomer and a phosphate group-containing monomer) as the copolymerizable monomer of the (a1). The term "without substantially containing" used herein means that the acidic group-containing monomer is not contained in the monomer mixture at all, or even if it is contained, the content thereof is 0.1 parts by weight or less per 100 parts by weight of the total amount of monomer components.

The pressure-sensitive adhesive composition of the present invention contains the monomer mixture or its partially polymerized product containing the monomer (a2) having at least one nitrogen atom and one ethylenically unsaturated bond in its molecule as a monomer component. Therefore, the pressure-sensitive adhesive composition can provide a pressure-sensitive adhesive layer which is difficult to cause the increase in adhesive force with the passage of time to an adherend (particularly, a metal adherend). Furthermore, the pressure-sensitive adhesive composition can provide a pressure-sensitive adhesive layer which is difficult to cause corrosion to an adherend (particularly, a metal adherend). This is because the (a2) does not have a structure in its molecule, causing interaction between the pressure-sensitive adhesive layer and the adherend (for example, the acidic group). The term "metal adherend" used herein means an adherend having a metal as a material.

Where a pressure-sensitive adhesive layer formed from a pressure-sensitive adhesive composition substantially containing an acidic group-containing monomer is adhered to a metal adherend, adhesive force is increased with the

passage of time due to the interaction between the pressure-sensitive adhesive layer and the adherend (for example, hydrogen bonding between an acid component and a metal), and as a result, the pressure-sensitive adhesive layer may be difficult to be peeled off from the adherend and separation and dismantling of a bonded part may be difficult. Furthermore, corrosion by an acid component may occur in the metal adherend.

The pressure-sensitive adhesive composition of the present invention contains the monomer mixture or its partially polymerized product containing (a3) in addition to (a2). Therefore, the pressure-sensitive adhesive composition can provide a pressure-sensitive adhesive layer which is more difficult to cause the increase in adhesive force with the passage of time.

The another reason that the pressure-sensitive adhesive composition of the present invention can provide a pressure-sensitive adhesive layer which can maintain high initial adhesive force and adhesion reliability (particularly, repelling resistance) at the time of bonding and can easily be peeled off from an adherend at the time of peeling and can easily separate and dismantle a bonded part, is that the pressure-sensitive adhesive composition contains the monomer mixture or its partially polymerized product containing (a3) together with the (a2) as monomer components. This is because the (a3) is a component of increasing the effect of the (a2).

The pressure-sensitive adhesive composition of the present invention contains thermal-expandable fine particles. Therefore, when the pressure-sensitive adhesive layer formed from the pressure-sensitive adhesive composition of the present invention (the pressure-sensitive adhesive layer of the present invention described hereinafter; a thermal-expandable fine particle-containing pressure-sensitive adhesive layer) is heated after adhered to an adherend, the contact area between the pressure-sensitive adhesive layer and the adherend is decreased due to the expansion of the thermal-expandable fine particles by heating, thereby exerting: (i) properties (peelability, easy peelability) that adhesive force is easily decreased; and (ii) dismantlability (separability) of a bonded part. That is, the pressure-sensitive adhesive composition of the present invention can form a pressure-sensitive adhesive layer which can easily be peeled off and dismantled by heating at the time of peeling. In the present application, the properties (i) and (ii) may sometimes be called "peelability/dismantlability" as a whole.

Where the pressure-sensitive adhesive composition contains a monomer mixture or its partially polymerized product containing, in place of the (a1), an alkyl (meth)acrylate monomer having 4 to 12 carbon atoms in its alkyl moiety and having a glass transition temperature when formed into a homopolymer exceeding 0°C, initial adhesive force and adhesion reliability of the pressure-sensitive adhesive layer formed from the pressure-sensitive adhesive composition may be decreased, and those properties become hard to be achieved together with peelability/dismantlability.

Furthermore, where the pressure-sensitive adhesive composition contains a monomer mixture or its partially polymerized product containing, in place of the (a1), an alkyl (meth)acrylate monomer having 1 to 3 carbon atoms in its alkyl moiety and having a transition temperature when formed into a homopolymer exceeding 0°C, or an alkyl (meth) acrylate monomer having more than 12 carbon atoms in its alkyl moiety and having a glass transition temperature when formed into a homopolymer exceeding 0°C, initial adhesive force and adhesion reliability of the pressure-sensitive adhesive layer formed from the pressure-sensitive adhesive composition may be decreased, and those properties become hard to be achieved together with peelability/dismantlability.

(Pressure-sensitive adhesive layer)

The pressure-sensitive adhesive layer (adhesive layer) of the present invention is a pressure-sensitive adhesive layer formed from the pressure-sensitive adhesive composition (thermal-expandable fine particle-containing pressure-sensitive adhesive composition). Furthermore, the pressure-sensitive adhesive layer of the present invention is a pressure-sensitive adhesive layer containing thermal-expandable fine particles (thermal-expandable fine particle-containing pressure-sensitive adhesive layer), The pressure-sensitive adhesive layer of the present invention contains a polymer of the monomer mixture or its partially polymerized product, as a base polymer.

The solvent-insoluble content (gel fraction) in the pressure-sensitive adhesive sheet of the present invention is not particularly limited, but is preferably 50 to 99% by weight, and more preferably 60 to 95% by weight. When the solvent-insoluble content is less than 50% by weight, the pressure-sensitive adhesive layer may be difficult to be peeled off from an adherend by the expansion of the thermal-expandable fine particles. When the solvent-insoluble content is more than 99% by weight, wettability of the pressure-sensitive adhesive layer may be deteriorated, and adhesion may become difficult.

The solvent-insoluble content of the pressure-sensitive adhesive layer means a "proportion of solvent-insoluble components" in the pressure-sensitive adhesive layer, and is a value calculated by the following "measurement method of solvent-insoluble content of pressure-sensitive adhesive layer". The solvent-insoluble content in the pressure-sensitive adhesive layer includes the thermal-expandable fine particles insoluble in a solvent.

Measurement method of solvent-insoluble content in pressure-sensitive adhesive layer

About 1 g of a pressure-sensitive adhesive layer is weighed, and this is used as a sample. The sample is precisely weighed to obtain its weight, and the weight is taken as "weight of a pressure-sensitive adhesive layer before dipping". The sample is dipped in 40 g of ethyl acetate for 7 days, and all of components insoluble in ethyl acetate (insoluble part) is recovered. The insoluble part recovered is dried at 130°C for 2 hours, and its weight is obtained. The weight is used as "dry weight of insoluble part". The numerical values obtained are substituted in the following equation, and calculation is made.

**Solvent-insoluble content (% by weight) of pressure-sensitive adhesive layer**

**= [(dry weight of insoluble part) / (weight of pressure-sensitive adhesive layer before dipping)] × 100**

The thickness of the pressure-sensitive adhesive layer of the pressure-sensitive adhesive sheet of the present invention is appropriately selected according to use purpose, reduction in adhesive force by heating, and the like. In order to keep smoothness of the surface of the thermal-expandable fine particle-containing pressure-sensitive adhesive layer, the thickness is preferably the maximum particle size or more of the thermal-expandable fine particles (particularly, thermal-expandable microspheres). From the standpoint of obtaining good peelability/dismantlability in the pressure-sensitive adhesive layer of the present invention, larger thickness is preferred in the pressure-sensitive adhesive layer because the absolute amount of the thermal-expandable fine particles in the pressure-sensitive adhesive layer is increased with the increase in the thickness of the pressure-sensitive adhesive layer, However, when the thickness of the pressure-sensitive adhesive layer of the present invention is increased, the absolute amount of the thermal-expandable fine particle is increased in the pressure-sensitive adhesive layer, and thus, the proportion of the adhesive components in the pressure-sensitive adhesive layer is decreased, and therefore adhesive force and adhesion reliability in the pressure-sensitive adhesive layer may be decreased.

The thickness of the pressure-sensitive adhesive layer of the present invention is not particularly limited, but it is preferably 1 to 300 μm, more preferably 10 to 250 μm, and further preferably 30 to 200 um, from the standpoint of achieving both adhesion reliability and peelability/dismantlability in the pressure-sensitive adhesive layer. The pressure-sensitive adhesive layer of the pressure-sensitive adhesive sheet of the present invention may have a single layer structure or a laminate structure.

More specifically, the pressure-sensitive adhesive layer of the present invention can be formed by applying the pressure-sensitive adhesive composition to an appropriate support such as a release film or base to obtain a pressure-sensitive adhesive composition layer, and, if necessary, drying or curing (for example, curing by heat or an active energy ray) the pressure-sensitive adhesive composition layer, In the case of utilizing curing (photocuring) by an active energy ray, photopolymerization reaction is inhibited by oxygen in the air. Therefore, oxygen is preferably blocked by, for example, attaching a release film (a separator) to the pressure-sensitive adhesive composition layer or photocuring under nitrogen atmosphere.

In particular, from the standpoint of obtaining a structure in which the thermal-expandable fine particles are stably contained, the pressure-sensitive adhesive layer of the present invention is preferably formed from the pressure-sensitive adhesive composition containing the polymerization initiator (polymerization initiator such as photopolymerization initiator or thermal polymerization initiator) by utilizing the curing reaction by heat or an active energy ray. Furthermore, from the standpoint of obtaining a thick pressure-sensitive adhesive layer, the pressure-sensitive adhesive layer is preferably formed from the pressure-sensitive adhesive composition containing the photopolymerization initiator by utilizing the curing reaction by an active energy ray,

The pressure-sensitive adhesive layer of the present invention contains the thermal-expandable fine particles. Therefore, the pressure-sensitive adhesive layer has property that adhesive force is easily decreased (easy peelability) by the expansion of the thermal-expandable fine particles by heating.

The pressure-sensitive adhesive layer of the present invention can maintain high initial pressure-sensitive adhesive force and adhesion reliability (particularly, repelling resistance) to adherends of various materials at the time of bonding and can exert good peelability/dismantlability by heating at the time of peeling. Furthermore, the pressure-sensitive adhesive layer has excellent adhesive characteristics.

The pressure-sensitive adhesive layer of the present invention can maintain high initial adhesive force and adhesion reliability (particularly, repelling resistance) at the time of bonding, to particularly a metal adherend, and can exert good peelability/dismantlability by heating at the time of peeling. Furthermore, the pressure-sensitive adhesive layer has excellent adhesive characteristics to a metal adherend.

(Pressure-sensitive adhesive sheet)

The pressure-sensitive adhesive sheet (adhesive sheet) of the present invention has at least the pressure-sensitive adhesive layer (thermal-expandable fine particle-containing pressure-sensitive adhesive layer). The pressure-sensitive adhesive sheet of the present invention has the pressure-sensitive adhesive sheet, and therefore exerts the properties that high initial adhesive force and adhesion reliability (particularly, repelling resistance) to an adherent can be maintained at the time of bonding and adhesive force (adhesive strength, bonding strength) can be decreased at the time of peeling. Furthermore, the pressure-sensitive adhesive layer has excellent adhesive characteristics,

In particular, the pressure-sensitive adhesive sheet of the present invention has high initial adhesive force even to a metal adherend, and further has the property that adhesive force can be easily decreased by the expansion of the thermal-expandable fine particles by heating at the time of peeling. Furthermore, the pressure-sensitive adhesive layer has excellent adhesive characteristics to a metal adherend.

The pressure-sensitive adhesive sheet of the present invention has a pressure-sensitive adhesive sheet for re-peelable purpose. The pressure-sensitive adhesive sheet of the present invention is a thermal-expandable, re-peelable pressure-sensitive adhesive sheet.

The form of the pressure-sensitive adhesive sheet of the present invention is not particularly limited, and may have a form that the pressure-sensitive adhesive sheet is wounded in a roll shape, or may have a form that the sheets are laminated. That is, the pressure-sensitive adhesive sheet of the present invention can have various forms such as a sheet form and a tape form,

The pressure-sensitive adhesive sheet having the form that the pressure-sensitive adhesive sheet is wounded in a roll form may have the form that the pressure-sensitive adhesive sheet is wounded in a roll shape in the state that its pressure-sensitive adhesive surface is protected by a release film described hereinafter. Furthermore, in the case of a type having a base described hereinafter, the pressure-sensitive adhesive sheet may have the form that the pressure-sensitive adhesive sheet is wound in a roll form in the state that its pressure-sensitive adhesive surface is protected by a release-treated layer (back surface-treated layer) formed on one side of the base. A release-treating agent (release agent) used in forming the release-treated layer on one side of the base is not particularly limited. Examples of the release agent include silicone release agents and long chain alkyl release agents.

The pressure-sensitive adhesive sheet of the present invention may be a double-coated pressure-sensitive adhesive sheet in which both sides thereof are a pressure-sensitive adhesive surface, and may be a single-coated pressure-sensitive adhesive layer in which only one side thereof is a pressure-sensitive adhesive surface. The double-sided pressure-sensitive adhesive sheet is preferred

The pressure-sensitive adhesive sheet of the present invention may be a so-called "baseless type" sheet (hereinafter sometimes referred to as a "baseless pressure-sensitive adhesive sheet") which does not have a base (base layer), and may be a pressure-sensitive adhesive sheet of a type having a base (hereinafter sometimes referred to as a "base-attached pressure-sensitive adhesive sheet"). The baseless pressure-sensitive adhesive sheet includes a pressure-sensitive adhesive sheet consisting of a pressure-sensitive adhesive layer. The base-attached pressure-sensitive adhesive layer includes a pressure-sensitive adhesive sheet having a pressure-sensitive adhesive layer on at least one side of the base.

The base is not particularly limited. Examples of the base include paper bases such as a paper; fiber bases such as cloth, non-woven fabric and net; metal bases such as metal foil and metal plate; plastic bases such as films or sheets of various resins (olefin resins, polyester resins, polyvinyl chloride resins, vinyl acetate resins, amide resins, polyimide resins, polyether ether ketone (PEEK), polyphenylene sulfide (PPS), and the like); rubber bases such as rubber sheet; foams such as foamed sheet; and their laminates (in particular, laminates of plastic bases and other bases, laminates of plastic films (or sheets) with each other, and the like).

The thickness of the base is not particularly limited, but is preferably 10 to 500 $\mu$m, more preferably 12 to 200 $\mu$m, and further preferably 15 to 100 $\mu$m. The base may have a single layer form, and may have a multilayer form. If necessary, various treatments such as back surface treatment, antistatic treatment and undercoat treatment may be applied to the substrate.

The pressure-sensitive adhesive sheet of the present invention may contain an exothermic layer. When the pressure-sensitive adhesive layer of the present invention has an exothermic layer, at the time of peeling from an adherend, the thermal-expandable fine particles can be expanded by inducing the exothermic layer to generate heat and adhesive force to the adherend can be decreased.

In the case of providing the exothermic layer to the pressure-sensitive adhesive sheet of the present invention, the position of the exothermic layer in the entire pressure-sensitive adhesive sheet is not particularly limited so long as at least one surface of the pressure-sensitive adhesive sheet is a surface provided by the pressure-sensitive adhesive layer (thermal-expandable fine particle-containing pressure-sensitive adhesive layer).

The exothermic layer is not particularly limited, but is preferably a planar exothermic body. The planar exothermic body has at least exothermic element which generates heat by passage of electric current and has a flat plate shape or

a sheet shape. Examples of the exothermic element having a flat plate shape or a sheet shape include metal foils, metal plates, a sheet shaped graphite carbon, and a sheet shaped material containing carbon powder, metal powder or the like. The planar exothermic body may contain an electrical insulating sheet covering the exothermic element having a planar shape or sheet shape.

The thickness of the exothermic layer is not particularly limited, but is preferably 10 to 300 $\mu$m, and more preferably 10 to 150 $\mu$m,

The pressure-sensitive adhesive sheet of the present invention may be a base-attached pressure-sensitive adhesive sheet having the exothermic layer as a base.

The pressure-sensitive adhesive sheet of the present invention may have other layer(s) such as an intermediate layer, undercoat layer, or a pressure-sensitive adhesive layer other than the above pressure-sensitive adhesive layer, unless it impairs the advantageous effects of the present invention.

Examples of the pressure-sensitive adhesive layer other than the above pressure-sensitive adhesive layer, include a thermal-expandable fine particle-non-containing pressure-sensitive adhesive layer which is a pressure-sensitive adhesive layer which does not contain thermal-expandable fine particles. The thermal-expandable fine particle-non-containing pressure-sensitive adhesive layer is formed by, for example, using the conventional pressure-sensitive adhesives (for example, acrylic pressure-sensitive adhesives, rubber pressure-sensitive adhesives, vinyl alkyl ether pressure-sensitive adhesives, silicone pressure-sensitive adhesives, polyester pressure-sensitive adhesives, polyamide pressure-sensitive adhesives, urethane pressure-sensitive adhesives, fluorine pressure-sensitive adhesives, and epoxy pressure-sensitive adhesives) by utilizing the conventional pressure-sensitive adhesive layer forming methods. The thickness of the thermal-expandable fine particle-non-containing pressure-sensitive adhesive layer is not particularly limited, and is appropriately selected according to use purposes and use methods of the pressure-sensitive adhesive layer,

For the purpose of protecting the pressure-sensitive adhesive layer surface, the pressure-sensitive adhesive sheet of the present invention may be protected by a release film (separator) until the use. Further, the release film may be used in preparing the pressure-sensitive adhesive sheet of the present invention. The release film is not necessarily used in preparing the pressure-sensitive adhesive sheet of the present invention. However, since the photopolymerization reaction is inhibited by oxygen contained in the air, the release film is preferably used in the preparation to suppress the contact of the pressure-sensitive adhesive composition with oxygen. The release film is peeled off at the time of use of the pressure-sensitive adhesive sheet of the present invention.

The release film is not particularly limited. Examples of the release film include bases in which at least one surface thereof has been release-treated by a release agent; low adhesive bases comprising a fluorine polymer (for example, polytetrafluoroethylene, polychlorotrifluoroethylene, polyvinyl fluoride, polyvinylidene fluoride, tetrafluoroethylene-hexafluoropropylene copolymer, or chlorofluoroethylene-vinylidene fluoride copolymer); and low adhesive bases comprising a non-polar polymer (for example, olefin resin such as polyethylene or polypropylene). In the low adhesive bases, both surfaces are utilized as a release surface. On the other hand, in the release-treated bases, a release-treated surface is utilized as a release surface. The release film is formed by the conventional methods.

Examples of a base in the base in which at least one surface has been release-treated by the release agent, include polyester films such as polyethylene terephthalate film; olefin resin films such as polyethylene film or polypropylene film; polyvinyl chloride film; polyimide films; polyamide films such as nylon film; and plastic base films (synthetic resin films) such as rayon film. Examples of the base further include paper bases constituted of papers such as high-quality paper, Japanese paper, kraft paper, glassine paper, synthetic paper, or topcoat paper. Of these, polyester films such as polyethylene terephthalate film are preferred.

The release agent in the base in which at least one surface has been release-treated by the release agent is not particularly limited. Examples of the release agent include silicone release agents, fluorine release agents, and long chain alkyl release agents. The release agent is used alone or in combination of two or more thereof.

The thickness of the release film is not particularly limited. The release film may have any form of a single layer and a laminate.

A method of preparing the pressure-sensitive adhesive sheet of the present invention is not particularly limited. The pressure-sensitive adhesive sheet may be prepared by the conventional known methods. A baseless pressure-sensitive adhesive sheet constituted of only the pressure-sensitive adhesive layer is formed by, for example, applying the pressure-sensitive adhesive composition to the release film to obtain a pressure-sensitive adhesive composition layer, and curing the pressure-sensitive adhesive composition layer, thereby obtaining a pressure-sensitive adhesive layer. A base-attached pressure-sensitive adhesive sheet constituted of at least the base and the pressure-sensitive adhesive layer is formed by, for example, applying the pressure-sensitive adhesive composition to at least one side of the base to obtain a pressure-sensitive adhesive composition layer, and curing the pressure-sensitive adhesive composition layer, thereby obtaining a pressure-sensitive adhesive layer, The base-attached pressure-sensitive adhesive layer may be formed by transferring the pressure-sensitive adhesive layer separately prepared to at least one side of the base.

Application methods and applicators, used in applying the pressure-sensitive adhesive composition to a release film or base are not particularly limited, and the application method described hereinafter and the applicator described hereinafter may be used.

A method of curing the pressure-sensitive adhesive composition is not particularly limited. Photocuring using an active energy ray is preferably used from the standpoints of workability, energy saving and capability of providing a relatively thick pressure-sensitive adhesive layer. The active energy ray is, as described above, not particularly limited. Examples of the active energy ray include an electron ray and an ultraviolet ray, and an ultraviolet ray is particularly preferred. Irradiation method, illuminance, light intensity, and the like of the active energy ray are not particularly limited, and are appropriately selected.

In the case that photocuring by an active energy ray is used as the method of curing the pressure-sensitive adhesive composition, irradiation method of an active energy ray may appropriately be selected from the standpoint of adjusting adhesive characteristics such as initial pressure-sensitive adhesive force of the pressure-sensitive adhesive sheet of the present invention, A method of adjusting adhesive characteristics such as initial adhesive force of a pressure-sensitive adhesive sheet, which uses photocuring by an active energy ray as the curing method of a pressure-sensitive adhesive composition, is specifically exemplified by the method described in JP 2003-13015A. JP 2003-13015A discloses a method in which irradiation of an active energy ray is conducted dividing into plural stages, thereby further precisely adjusting adhesive performance. More specifically, the method includes (i) a method in which in the case of using an ultraviolet ray as the active energy ray, irradiation of an ultraviolet ray is conducted by dividing into two stages: a first stage of conducting light irradiation with illuminance of 30 $mW/cm^2$ or more; and a second stage of conducting light irradiation with illuminance lower than that in the first stage, thereby substantially completing a polymerization reaction, and (ii) a method in which irradiation of an ultraviolet ray is conducted by dividing into three stages: a first stage of conducting light irradiation with illuminance of 30 $mW/cm^2$ or more, a second stage of conducting light irradiation with illuminance lower than that in the first stage to achieve the conversion of at least 70% by weight, and a third stage of conducting light irradiation with illuminance of 30 $mW/cm^2$ or more, thereby substantially completing a polymerization reaction. The conversion is calculated by the same method as in the case of the conversion of the partially polymerized product.

Examples of an irradiator of ultraviolet ray used in the above first stage include a low pressure mercury lamp, a high pressure mercury lamp, an ultrahigh pressure mercury lamp, and a metal halide lamp. Examples of an irradiator used in the above second stage include a chemical lamp and a black light lamp.

Preferred preparation example of the baseless pressure-sensitive adhesive sheet consisting of only the pressure-sensitive adhesive layer (pressure-sensitive adhesive layer of the present invention) is described below by reference to the drawings as necessary. The preparation method of the pressure-sensitive adhesive sheet of the present invention is not limited to this preparation example. The preferred preparation example of the baseless pressure-sensitive adhesive sheet consisting of the pressure-sensitive adhesive layer is hereinafter sometimes referred to as "Preparation Example 1".

Figs. 1 to 3 show a first step, a second step and a third step of Preparation Example 1, respectively. Fig. 4 shows a pressure-sensitive adhesive sheet obtained by Preparation Example 1. In Figs. 1 to 4, "1a" indicates the first step of Preparation Example 1, "1b" indicates the second step of Preparation Example 1, "1c" indicates the third step of Preparation Example 1, and "1d" indicates a pressure-sensitive adhesive sheet obtained by Preparation Example 1. Furthermore, in Figs. 1 to 4, 11 is a thermal-expandable fine particle-containing pressure-sensitive adhesive composition layer, 12 is a release film (separator), 13 is a thermal-expandable fine particle-containing pressure-sensitive adhesive layer, 14 indicates an active energy ray, and 15 is a pressure-sensitive adhesive sheet.

The first step of Preparation Example 1 is a step of applying the thermal-expandable fine particle-containing pressure-sensitive adhesive composition to a release-treated surface of the release film 12 to form the thermal-expandable fine particle-containing pressure-sensitive adhesive composition layer 11 (see Fig. 1). By this step, a sheet in which the thermal-expandable fine parcicle-containing pressure-sensitive adhesive composition layer II has been formed on the release-treated surface of the release film 12 is obtained.

In the first step of Preparation Example I, an application method used in applying the thermal-expandable fine particle-containing pressure-sensitive adhesive composition to the release-treated surface of the release film 12 is not particularly limited. Examples of the application method include a slot die method, a reverse gravure coating method, a microgravure method, a dipping method, a spin coating method, a brush coating method, a roll coating method, and a flexo printing method. In applying the thermal-expandable fine particle-containing pressure-sensitive adhesive composition to the release-treated surface of the release film 12, applicators generally used are used without particular limitation, Examples of the applicator include roll coaters such as a reverse coater and a gravure coater; curtain coaters; lip coaters, die coaters; and knife coaters.

The second step of Preparation Example 1 is a step of adhering the release film 12 to the thermal-expandable fine particle-containing pressure-sensitive adhesive composition layer 11 side of the sheet prepared by the first step, in the state that the release-treated surface of the release film 12 comes into contact with the surface of the thermal-expandable fine particle-containing pressure-sensitive adhesive composition layer 11 (see Fig. 2). By this step, a sheet

having release films 12 at both sides of the thermal-expandable fine particle-containing pressure-sensitive adhesive composition layer 11 (a sheet having a layer constitution of release film 12/thermal-expandable fine particle-containing pressure-sensitive adhesive composition layer 11/release film 12) is obtained.

It is preferred in the second step of Preparation Example 1 to suppress the contact of a pressure-sensitive adhesive composition with oxygen inhibiting photocuring polymerization (photopolymerization reaction) in photocuring the pressure-sensitive adhesive composition. For this reason, oxygen is blocked by attaching the release film 12.

A method of suppressing the contact of a pressure-sensitive adhesive composition with oxygen is not particularly limited in Preparation Example 1. Therefore, other than the method of blocking oxygen using a release film, a method in which irradiation of an active energy ray is conducted in environment under an atmosphere of an inert gas (for example, nitrogen gas) may be used. In other words, in the second step of Preparation Example 1, inhibition of photopolymerization reaction by oxygen may be suppressed by setting the environment, at which irradiation of an active energy ray is to be conducted, to an inert gas atmosphere with using an inert gas (for example, nitrogen gas), in place of by adhering the release film 12. In the case that the thermal-expandable fine particle-containing pressure-sensitive adhesive composition layer 11 is photocured using an active energy ray 14 in an inert gas atmosphere such as nitrogen gas, the thermal-expandable fine particle-containing pressure-sensitive adhesive composition layer 11 may not be covered with the release film 12.

In the case that a method of setting the environment at which irradiation of an active energy ray is to be conducted to an inert gas atmosphere is used as the method of preventing the contact of a pressure-sensitive adhesive composition with oxygen, oxygen is preferably not present as possible in the inert gas atmosphere, and for example, the amount of oxygen present is preferably 5,000 ppm or less in terms of oxygen concentration.

In the case that the amount of dissolved oxygen in the thermal-expandable fine particle-containing pressure-sensitive adhesive composition layer 11 is large, there may be some cases that the amount of radicals generated is suppressed, polymerization (photopolymerization) does not proceed sufficiently, and this may adversely affect the conversion, molecular weight and molecular weight distribution of the polymer obtained. For this reason, bubbling treatment by an inert gas may be conducted to the thermal-expandable fine particle-containing pressure-sensitive adhesive composition, before forming the thermal-expandable fine particle-containing pressure-sensitive adhesive composition layer 11.

The third step of Preparation Example 1 is a step of irradiating the sheet obtained by the second step with the active energy ray 14 from both surface sides of the sheet (see Fig. 3). In this step, the thermal-expandable fine particle-containing pressure-sensitive adhesive composition layer 11 is irradiated with the active energy ray 14 through the release film 12, As a result, the thermal-expandable fine particle-containing pressure-sensitive adhesive composition layer 11 is photocured to form the thermal-expandable fine particle-containing pressure-sensitive adhesive layer 13. In the sheet obtained by the second step, the thermal-expandable fine particle-containing pressure-sensitive adhesive composition layer 11 is blocked by the release film 12 from oxygen becoming inhibition factor of a photocuring reaction.

Examples of the active energy ray 14 include ionizing radiations such as $\alpha$-ray, $\beta$-ray, $\gamma$-ray, neutron ray, and electron ray, and ultraviolet rays. Of those, ultraviolet rays are preferred. Irradiation energy and irradiation time of the active energy ray are not particularly limited so long as it can induce the reaction of monomer components. The preferred embodiment of irradiation of the active energy ray 14 is, for example, irradiation with ultraviolet rays having illuminance of 1 to 200 $mW/cm^2$ at a wavelength of 300 to 400 nm in light intensity of 400 to 4,000 $mJ/cm^2$.

Light source used in irradiating ultraviolet ray as the active energy ray 14 is not particularly limited so long as it has spectrum distribution in a region at a wavelength of 180 to 460 nm (preferably 300 to 400 nm). Examples of the light source include general irradiators such as a chemical lamp, a black lamp (for example, black light manufactured by Toshiba Lighting & Technology Corporation), mercury arc, carbon arc, a low pressure mercury lamp, a medium pressure mercury lamp, a high pressure mercury lamp, an ultrahigh pressure mercury lamp, and a metal halide lamp. Examples of the light source further include irradiators that can generate ionizing radiations having wavelength longer or shorter than the above-described wavelength.

Illuminance of ultraviolet rays in irradiating with ultraviolet rays as the active energy ray 14 is set to the desired illuminance by, for example, adjusting a distance of from the irradiator as the light source to the thermal-expandable fine particle-containing pressure-sensitive adhesive composition layer 11, and voltage.

In the case of curing the thermal-expandable fine particle-containing pressure-sensitive adhesive composition layer 11 in Preparation Example 1, the thermal-expandable fine particle-containing pressure-sensitive adhesive composition layer 11 is preferably cured such that the conversion reaches 90% by weight or more. Unreacted monomers may be removed by providing a drying step. The conversion is calculated in the same manner as in the case of the conversion of the above partially polymerized product.

In Fig. 4, "1d" indicates the pressure-sensitive adhesive sheet obtained by Preparation Example 1. The pressure-sensitive adhesive sheet 15 is a baseless double-coated pressure-sensitive adhesive sheet in which both sides of the thermal-expandable fine particle-containing pressure-sensitive adhesive layer 13 is protected by the release film 12.

Thus, the pressure-sensitive adhesive sheet of the present invention is preferably prepared through: the first

step of applying the thermal-expandable fine particle-containing pressure-sensitive adhesive composition to the release-treated surface of the release film to form the thermal-expandable fine particle-containing pressure-sensitive adhesive composition layer; the second step of adhering the release film to the thermal-expandable fine particle-containing pressure-sensitive adhesive composition layer formed in the first step in the state that the release-treated surface of the release film comes into contact with the thermal-expandable fine particle-containing pressure-sensitive adhesive composition layer; and the third step of irradiating the sheet with an active energy beam.

In the pressure-sensitive adhesive sheet of the present invention, 180° peel adhesive strength (180° peel adhesive force; to stainless steel plate (SUS304BA plate), tension rate: 300 mm/min, 23°C atmosphere) is not particularly limited. The 180° peel adhesive strength is preferably 12 N/25 mm or more (for example, 12 to 100 N/25 mm), more preferably 14 N/25 mm or more (for example, 14 to 90 N/25 mm), and further preferably 15 N/25 mm or more (for example, 15 to 80 N/25 mm). When the 180° peel adhesive strength is less than 12 N/25 mm, sufficient adhesiveness cannot be exerted to an adherend in some cases. When the 180° peel adhesive strength is too large (for example, exceeding 100 N/25 mm), peelability/dismantlability may be adversely affected in some cases.

The adhesive characteristics such as initial adhesive force of the pressure-sensitive adhesive sheet of the present invention are adjusted by appropriately selecting a composition of the pressure-sensitive adhesive composition for forming the pressure-sensitive adhesive layer, kind and amount of the thermal-expandable fine particles used, curing method at the time of the preparation of the pressure-sensitive adhesive layer (for example, irradiation method of active energy ray), thickness of the pressure-sensitive adhesive layer, and the like.

In the pressure-sensitive adhesive sheet of the present invention, "floating distance" obtained in a repelling resistance test described below is not particularly limited, but is preferably less than 10 mm, more preferably less than 8 mm, and further preferably less than 6 mm, Where the floating distance exceeds 10 mm, when stress is applied over a long period of time, a pressure-sensitive adhesive sheet may be easy to be peeled off from an adherend, and adhesion reliability may be decreased.

In general, when stress is applied over a long period of time in the state that a pressure-sensitive adhesive sheet is adhered to an adherend, phenomena of "peeling", "floating", "partial peeling", "deviation" and the like from an adherend may occur in the pressure-sensitive adhesive sheet. The "repelling resistance" herein means the property that can suppress occurrence of the above phenomena.

Repelling resistance test

Surface opposite a measurement surface (surface provided by the pressure-sensitive adhesive layer (thermal-expandable fine particle-containing pressure-sensitive adhesive layer)) of a pressure-sensitive adhesive sheet is adhered to an aluminum plate to obtain a laminate of the aluminum plate and the pressure-sensitive adhesive sheet. In adhering the surface opposite the measurement surface of the pressure-sensitive adhesive sheet to the aluminum plate, a strongly adhesive double-coated pressure-sensitive adhesive tape for fixing may be used as necessary. The obtained laminate of the aluminum plate and the pressure-sensitive adhesive sheet is used as a sample for a repelling resistance test.
The sample for a repelling resistance test is bent at the curvature of R50 facing the measurement surface side (pressure-sensitive adhesive sheet side) outward. That is, the sample is bent along the circumference of a circle having a radius of 20 mm.
The sample for a repelling resistance test after bending is adhered to an acrylic plate (trade name: ACRYLITE, manufactured by Mitsubishi Rayon Co., Ltd.) by pressure bonding so as not to form floating in the state that the measurement surface comes into contact with the acrylic plate, that is, in the state that the pressure-sensitive adhesive sheet comes into contact with the acrylic plate.
The sample for a repelling resistance test adhered to the acrylic plate is allowed to stand at room temperature (23°C) for 7 hours. Floating distance (distance floated) from the acrylic plate at both ends (both ends in a length direction) of the sample for a repelling resistance test is measured, and its average value is obtained. The average value is taken as "floating distance".

In the pressure-sensitive adhesive sheet of the present invention, it is preferred that the evaluation by the heat dismantlability test 1 described below is good, It is more preferably that the both evaluations by the heat dismantlability test 1 and the heat dismantlability test 2 described below are good. When the evaluation by the heat dismantlability test 1 is poor, there may be some cases that sufficient peelability/dismantlability cannot be exerted by heating at the time of peeling off the pressure-sensitive adhesive sheet from an adherend. When the pressure-sensitive adhesive sheet of the present invention meets the conditions that the both evaluations by the heat dismantlability test 1 and the heat dismantlability test 2 are good, even though the sheet has been stored or used at ordinary temperature (23°C) over a long period of time (for example, about 5 to 10 years), sufficient peelability/dismantiability can be exerted by heating at the time of peeling off the pressure-sensitive adhesive sheet from an adherend.

Heat dismantlability test 1

A pressure-sensitive adhesive sheet is adhered to a clean 304BA stainless steel plate (SUS304BA plate) by pressure bonding in an atmosphere of 23°C by reciprocating one time with a 2 kg roller in the state that a measurement surface (surface provided by the pressure-sensitive adhesive layer (thermal-expandable fine particle-containing pressure-sensitive adhesive layer)) of the pressure-sensitive adhesive sheet comes into contact with the stainless steel plate, and the resulting laminate is aged at 23°C for 30 minutes to obtain a sample for evaluation (structure having a laminate constitution of pressure-sensitive adhesive sheet and 304BA stainless steel plate).
The sample for evaluation is placed in a hot air dryer while maintaining the state that the pressure-sensitive adhesive sheet is adhered to the 304BA stainless steel plate, and then heat-treated at 130°C for 10 minutes.
The condition of the sample for evaluation after heat treatment is confirmed, and heat dismantlability of the pressure-sensitive adhesive sheet is evaluated by the following standards.
Good: Case that a pressure-sensitive adhesive sheet has been peeled off from a 304BA stainless steel plate, or case that a pressure-sensitive adhesive sheet can easily be peeled off from a 304BA stainless steel plate
Failure: Case that a pressure-sensitive adhesive sheet cannot easily be peeled off from a 304BA stainless steel plate

Heat dismantlability test 2

A pressure-sensitive adhesive sheet is laminated to a clean 304BA stainless steel plate (SUS304BA plate) by pressure bonding in an atmosphere of 23°C by reciprocating one time with a 2 kg roller in the state that a measurement surface (surface provided by a thermal-expandable fine particle-containing pressure-sensitive adhesive layer) of the pressure-sensitive adhesive sheet comes into contact with the stainless steel plate, and the resulting laminate is aged at 85°C for one week. After aging, the laminate is allowed to stand at 23°C for 24 hours to obtain a sample for evaluation (structure having a laminate constitution of pressure-sensitive adhesive sheet and 304BA stainless steel plate).
The sample for evaluation is placed in a hot air dryer while maintaining the state that the pressure-sensitive adhesive sheet is adhered to the 304BA stainless steel plate, and then heat-treated at 130°C for 10 minutes.
The condition of the sample for evaluation after heat treatment is confirmed, and heat dismantlability of the pressure-sensitive adhesive sheet is evaluated by the following standards.
Good: Case that a pressure-sensitive adhesive sheet has been peeled off from a 304BA stainless steel plate, or case that a pressure-sensitive adhesive sheet can easily be peeled off from a 304BA stainless steel plate
Failure: Case that a pressure-sensitive adhesive sheet cannot easily be peeled off from a 304BA stainless steel plate

The thickness of the pressure-sensitive adhesive sheet of the present invention is not particularly limited. The thickness is preferably 10 to 300 $\mu$m, and more preferably 30 to 150 $\mu$m.

The heat treatment at the time of peeling off the pressure-sensitive adhesive sheet of the present invention from the adherend is not particularly limited, and can be conducted utilizing appropriate heating means. Examples of the heat treatment include heat treatments using a hot plate, a hot air dryer, an infrared lamp, a near-infrared lamp, an air dryer, hot water and the like. The temperature of the heat treatment is not particularly limited so long as the temperature is higher than an expansion initiation temperature of the thermal-expandable fine particles. The temperature is appropriately set according to surface state of an adherend, the kind of the thermal-expandable fine particles, heat resistance of an adherend, and heating method (heat capacity, heating means). More specific examples of the heat treatment include a heat treatment of heating at a temperature of 100 to 250°C for 5 to 90 seconds by a hot plate, and a heat treatment of heating at a temperature of 100 to 250°C for 5 to 15 minutes by a hot air dryer.

The adherend to which the pressure-sensitive adhesive sheet of the present invention is adhered is not particularly limited. Examples of the adherend include plastic adherends, metal adherends, fiber adherends, paper adherends, inorganic material adherends and composite material adherends (adherends constituted of at least two materials of various materials such as plastics (resins), metals, fibers, papers and inorganic materials). Of those, the preferred adherends are plastic adherends, metal adherends, and composite material adherends constituted of plastics (reins) and metals.

Resins constituting the plastic adherends are not particularly limited. Examples of the resin include polycarbonate, polypropylene, polyester, polystyrene, phenolic resin, epoxy resin, polyurethane, ALBS, acrylic resin, and mixed resins of those. Metals constituting the metal adherends are not particularly limited. Examples of the metal include iron, aluminum, copper, nickel, chromium, manganese, magnesium, zinc, tin, titanium, and their alloys (for example, stainless steel).

The surface shape of the adherend to which the pressure-sensitive adhesive sheet of the present invention is adhered is not particularly limited. Examples of the surface shape include a flat and smooth shape, a curved shape and a shape of a combination of a flat surface and a curved surface.

The pressure-sensitive adhesive sheet of the present invention has the pressure-sensitive adhesive layer described above, and therefore has excellent adhesive characteristics such as initial adhesive force to various adherends

including metal adherends, As a result, the pressure-sensitive adhesive sheet of the present invention is preferably used in bonding uses such as bonding use between members to each other, or bonding use between a cabinet and a member,

The pressure-sensitive adhesive sheet of the present invention has the pressure-sensitive adhesive layer described above, and therefore has excellent adhesion reliability, particularly repelling resistance. As a result, the pressure-sensitive adhesive sheet of the present invention is particularly effective in the case that the adherend has a curved surface, and is preferably used in bonding use between members having a curved surface to each other, or bonding use between a cabinet having a curved surface and a member having a curved surface.

The pressure-sensitive adhesive sheet of the present invention has the pressure-sensitive adhesive layer described above, and therefore can easily decrease its adhesive force by heating at the time of peeling the pressure-sensitive adhesive sheet from the adherend, and can be peeled and dismantled. This is because the thermal-expandable fine particles in the pressure-sensitive adhesive layer swell and/or expand by heating, and due to this, the thermal-expandable fine particle-containing pressure-sensitive adhesive layer is expansion-deformed, the surface of the thermal-expandable fine particle-containing pressure-sensitive adhesive layer deforms into concavo-convex shape, and adhesive force is decreased or is gradually lost, Therefore, the pressure-sensitive adhesive sheet of the present invention is preferably used in uses requiring rework and recycle.

The pressure-sensitive adhesive sheet of the present invention has excellent initial adhesive force, and further has excellent adhesion reliability, particularly repelling resistance, and therefore is preferably used in bonding uses in various fields such as automobiles, machine parts, electric appliances and building materials (for example, use for bonding a part and a part, or use for fixing a part to a cabinet). Above all, the pressure-sensitive adhesive sheet of the present invention has excellent peelability/dismantlability by heating, and is therefore particularly preferably used in bonding uses requiring recycle and rework. The double-coated pressure-sensitive adhesive sheet of the present invention is not limited to the above uses and is further used in the use of fixing a member semi-permanently.

EXAMPLES

The present invention is described below in more detail by reference to Examples, but the invention is not construed as being limited thereto.

(Preparation of Thermal-Expandable Fine Particle-Containing Pressure-Sensitive Adhesive Composition A)

In a four-necked flask, there were introduced 100 parts by weight of a monomer mixture consisting of 70 parts by weight of 2-ethylhexyl acrylate, 20 parts by weight of N-vinylpyrrolidone and 10 parts by weight of isobornyl acrylate; 0.05 part by weight of (1-hydroxy-cyclohexyl)penylketone (trade name: IRGACURE 184, manufactured by BASF Japan) as a photopolymerization initiator; and 0.05 part by weight of 2,2-dimethoxy-1,2-diphenylethan-1-one (trade name: IRGACURE 651, manufactured by BASF Japan) as a photopolymerization initiator, and the resulting mixture was photopolymerized by irradiating with ultraviolet rays in nitrogen atmosphere until viscosity (BH Viscometer No. 5 rotor, 10 rpm, temperature: 30°C) reaches about 15 Pa·s, thereby obtaining a partially polymerized monomer syrup (partially polymerized product of monomer mixture). The conversion of the partially polymerized monomer syrup was 8.5% by weight.

To 100 parts by weight of the partially polymerized monomer syrup, there were added 30 parts by weight of thermal-expandable fine particles (expanding agent, trade name: EXPANCEL 051DU40, manufactured by Expancel), and 0.04 part by weight of 1,6-hexanediol diacrylate (HDDA) as a polyfunctional (meth)acrylate , followed by uniformly mixing, thereby obtaining thermal-expandable fine particle-containing pressure-sensitive adhesive composition A.

(Preparation of Thermal-Expandable Fine Particle-Containing Pressure-Sensitive Adhesive Compositions B to G)

Thermal-expandable fine particle-containing pressure-sensitive adhesive compositions B to G were prepared in the same manner as the preparation of the thermal-expandable fine particle-containing pressure-sensitive adhesive composition A.

In a four-necked flask, there were introduced 100 parts by weight of a monomer mixture consisting of monomer components in amounts shown in Table 3; (1-hydroxy-cyclohexyl)penylketone (trade name: IRGACURE 184, manufactured by BASF Japan) in an amount shown in Table 3 as a photopolymerization initiator; and 2,2-dimethoxy-1,2-diphenylethan-1-one (trade name: IRGACURE 651, manufactured by BASF Japan) in an amount shown in Table 3 as a photopolymerization initiator, and the resulting mixture was photopolymerized by irradiating with ultraviolet rays in nitrogen atmosphere until viscosity (BH Viscometer No. 5 rotor, 10 rpm, temperature: 30°C) reaches about 15 Pa·s, thereby obtaining a partially polymerized monomer syrup (partially polymerized product of monomer mixture) used in each thermal-expandable fine particle-containing pressure-sensitive adhesive composition. The conversion of the partially polymerized monomer syrup used in each thermal-expandable fine particle-containing pressure-sensitive adhesive composition is

shown in Table 3.

To each 100 parts by weight of the partially polymerized monomer syrup, there were added thermal-expandable fine particles (expanding agent, trade name: EXPANCEL 051DU40, manufactured by Expancel) in an amount shown in Table 3, and 1,6-hexanediol diacrylate (HDDA) in an amount shown in Table 3 as a polyfunctional (meth)acrylate, followed by uniformly mixing, thereby obtaining the respective thermal-expandable fine particle-containing pressure-sensitive adhesive compositions.

TABLE 3

| | | Thermal-expandable fine particle-containing pressure-sensitive adhesive composition | | | | | | |
|---|---|---|---|---|---|---|---|---|
| | | A | B | C | D | E | F | G |
| Monomer component (parts by weight) | 2-Ethylhexyl acrylate | 70 | - | - | 70 | 90 | - | 90 |
| | Lauryl acrylate | - | 70 | - | - | - | 80 | - |
| | Butvl acrylate | - | - | 60 | - | - | - | - |
| | N-vinylpyrrolidone | 20 | 20 | 20 | - | - | - | - |
| | N-vinylcaprolactam | - | - | - | 20 | - | 20 | - |
| | Acrylic acid | - | - | - | - | 10 | - | - |
| | Isobornyl acrylate | 10 | 10 | 20 | 10 | - | - | 10 |
| Photopolymerization initiator (parts by weight) | IRGACURE 184 | 0.05 | 0.05 | 0.05 | 0.05 | 0.05 | 0.05 | 0.05 |
| | IRGACURE 651 | 0.05 | 0.05 | 0.05 | 0.05 | 0.05 | 0.05 | 0.05 |
| Thermal-expandable fine particle (parts by weight) | EXPANCEL 051DU40 | 30 | 30 | 30 | 30 | 30 | 30 | 30 |
| Polyfunctional (meth) acrylate (parts by weight) | 1,6-Hexanediol diacrylate | 0.040 | 0.001 | 0.038 | 0.035 | 0.100 | 0.010 | 0.100 |
| Conversion of partially polymerized monomer syrup (% by weight) | | 8.5 | 10.1 | 9.3 | 8.5 | 6.9 | 4.6 | 10.6 |

(Preparation of Thermal-Expandable Fine Particle-Containing Pressure-Sensitive Adhesive Compositions H to M)

Thermal-expandable fine particle-containing pressure-sensitive adhesive compositions H to M were prepared in the same manner as the preparation of the thermal-expandable fine particle-containing pressure-sensitive adhesive composition A.

In a four-necked flask, there were introduced 100 parts by weight of a monomer mixture consisting of monomer components in amounts shown in Table 4; (1-hydroxy-cyclohexyl)penylketone (trade name: IRGACURE 184, manufactured by BASF Japan) in an amount shown in Table 4 as a photopolymerization initiator; and 2,2-dimethoxy-1,2-diphenylethan-1,2-one (trade name: IRGACURE 651, manufactured by BASF Japan) in an amount shown in Table 4 as a photopolymerization initiator, and the resulting mixture was photopolymerized by irradiating with ultraviolet rays in nitrogen atmosphere until viscosity (BH Viscometer No. 5 rotor, 10 rpm, temperature: 30°C) reaches about 15 Pa·s, thereby obtaining a partially polymerized monomer syrup (partially polymerized product of monomer mixture) used in each thermal-expandable fine particle-containing pressure-sensitive adhesive composition. The conversion of the partially polymerized monomer syrup used in each thermal-expandable fine particle-containing pressure-sensitive adhesive composition is shown in Table 4.

To each 100 parts by weight of the partially polymerized monomer syrup, there were added thermal-expandable fine particles (expanding agent, trade name: EXPANCEL 051DU40, manufactured by Expancel) in an amount shown in Table 4, and 1,6-hexanediol diacrylate (HDDA) in an amount shown in Table 4 as a polyfunctional (meth)acrylate , followed by uniformly mixing, thereby obtaining the respective thermal-expandable fine particle-containing pressure-sensitive adhesive compositions.

TABLE 4

| | | Thermit-expandable fine particle-containing pressure-sensitive adhesive composition | | | | | |
|---|---|---|---|---|---|---|---|
| | | H | I | J | K | L | M |
| Monomer component (parts by weight) | 2-Ethylhexyl acrylate | 70 | 70 | 70 | 60 | 60 | 60 |
| | N-vinylpyrrolidone | 10 | 20 | 20 | - | - | - |
| | N-vinylcaprolactam | - | - | - | 30 | - | - |
| | Dimethyl acrylamide | - | - | - | - | 30 | 20 |
| | Isobornyl acrylate | 20 | - | - | 10 | 10 | 20 |
| | Cyclohexyl acrylate | - | 10 | - | - | - | - |
| | t-Butyl acrylate | - | - | 10 | - | - | - |
| Photopolymerization initiator (parts by weight) | IRGACURE 184 | 0.05 | 0.05 | 0.05 | 0.05 | 0.05 | 0.05 |
| | IRGACURE 651 | 0.05 | 0.05 | 0.05 | 0.05 | 0.05 | 0.05 |
| Thermal-expandable fine particle (parts by weight) | EXPANCEL 051DU40 | 30 | 30 | 30 | 30 | 30 | 30 |
| polyfunctional (meth) acrylate (parts by weight) | 1,6-Hexanediol diacrylate | 0.040 | 0.035 | 0.025 | 0.076 | 0.078 | 0.078 |
| Conversion of partially polymerized monomer syrup (% by weight) | | 12.3 | 11.2 | 11.2 | 11.5 | 10.3 | 12.0 |

(Preparation of Thermal-Expandable Fine Particle-Containing Pressure-Sensitive Adhesive Compositions N to Q)

Thermal-expandable fine particle-containing pressure-sensitive adhesive compositions N to Q were prepared in the same manner as the preparation of the thermal-expandable fine particle-containing pressure-sensitive adhesive composition A.

In a four-necked flask, there were introduced 100 Parts by weight of a monomer mixture consisting of monomer components in amounts shown in Table 5; (1-hydroxy-cyclohexyl)penylketone (trade name: IRGACURE 184, manufactured by BASF Japan) in an amount shown in Table 5 as a photopolymerization initiator; and 2,2-dimethoxy-1,2-diphenylethan-1-one (trade name: IRGACURE 651, manufactured by BASF Japan) in an amount shown in Table 5 as a photopolymerization initiator, and the resulting mixture was photopolymerized by irradiating with ultraviolet rays in nitrogen atmosphere until viscosity (BH Viscometer No. 5 rotor, 10 rpm, temperature: 30°C) reaches about 15 Pa·s, thereby obtaining a partially polymerized monomer syrup (partially polymerized product of monomer mixture) used in each thermal-expandable fine particle-containing pressure-sensitive adhesive composition. The conversion of the partially polymerized monomer syrup used in each thermal-expandable fine particle-containing pressure-sensitive adhesive composition is shown in Table 5.

To each 100 parts by weight of the partially polymerized monomer syrup, there were added thermal-expandable fine particles (expanding agent, trade name: EXPANCEL 051DU40, manufactured by Expancel) in an amount shown in Table 5, and 1,6-hexanediol diacrylate (HDDA) in an amount shown in Table 5 as a polyfunctional (meth)acrylate, followed by uniformly mixing, thereby obtaining the respective thermal-expandable fine particle-containing pressure-sensitive adhesive compositions.

TABLE 5

| | | Thermal-expandable fine particle-containing pressure-sensitive adhesive composition | | | |
|---|---|---|---|---|---|
| | | N | O | P | Q |
| Monomer component (parts by weight) | 2-Ethylhexyl acrylate | 70 | 70 | 70 | 70 |
| | N-vinylcaprolactam | 20 | 20 | 20 | 20 |
| | Cyclohexyl acylate | 10 | - | - | - |
| | t-Butyl acrylate | - | 10 | - | - |
| | 1,4-cyclohexane-dimethanol monoacrylate | - | - | 10 | - |
| | Dicyclopentanyl acrylate | - | - | - | 10 |
| Photopolymerization initiator (parts by weight) | IRGACURE 184 | 0.05 | 0.05 | 0.05 | 0.05 |
| | IRGACURE 651 | 0.05 | 0.05 | 0.05 | 0.05 |
| Thermal-expandable fine particle (parts by weight) | EXPANCEL 051DU40 | 30 | 30 | 30 | 30 |
| Polyfunctional (meth) acrylate (parts by weight) | 1,6-Hexanediol diacrylate | 0.035 | 0.035 | 0.010 | 0.010 |
| Conversion of partially polymerized monomer syrup (% by weight) | | 6.5 | 6.9 | 5.9 | 5.1 |

(Usage Example 1 of Release Film)

A polyester film (trade name: MRN-38, manufactured by Mitsubishi Plastics, Inc.), one surface of which had been release-treated with a silicone-based release treating agent, was used as a release film. This release film is called "Release Film A".

(Usage Example 2 of Release Film)

A polyester film (trade name: MRF-38, manufactured by Mitsubishi Plastics, Inc.), one surface of which had been release-treated with a silicone-based release treating agent, was used as a release film. This release film is called "Release Film B".

(Example 1)

The thermal-expandable fine particle-containing pressure-sensitive adhesive composition A was applied to a release-treated surface of the release film B in a dry thickness of 100 μm to form a thermal-expandable fine particle-containing pressure-sensitive adhesive composition layer. The thermal-expandable fine particle-containing pressure-sensitive adhesive composition layer was covered with a release-treated surface of the release film A, thereby obtaining a sheet having the thermal-expandable fine particle-containing pressure-sensitive adhesive composition layer between two release films (thermal-expandable fine particle-containing pressure-sensitive adhesive composition layer sheet). The thermal-expandable fine particle-containing pressure-sensitive adhesive composition layer sheet was irradiated with ultraviolet rays under the conditions of illuminance: 4 $mW/cm^2$ and light intensity: 1,200 $mJ/cm^2$ to photocure the thermal-expandable fine particle-containing pressure-sensitive adhesive composition layer sheet, thereby obtaining a double-coated pressure-sensitive adhesive sheet having the thermal-expandable fine particle-containing pressure-sensitive adhesive layer between two release films (double-coated pressure-sensitive adhesive sheet having a laminate constitution of release film A/thermal-expandable fine particle-containing pressure-sensitive adhesive layer (thickness:

100 μm)/release film B). Solvent-insoluble content in the thermal-expandable fine particle-containing pressure-sensitive adhesive layer of the viscoelastic layer sheet A was 74% by weight.

(Example 2)

A double-coated pressure-sensitive adhesive sheet having the thermal-expandable fine particle-containing pressure-sensitive adhesive layer between two release films was prepared in the same manner as in Example 1, except that the thermal-expandable fine particle-containing pressure-sensitive adhesive composition B was used in place of the thermal-expandable fine particle-containing pressure-sensitive adhesive composition A.
Solvent-insoluble content in the thermal-expandable fine particle-containing pressure-sensitive adhesive layer was 65% by weight.

(Example 3)

A double-coated pressure-sensitive adhesive sheet having the thermal-expandable fine particle-containing pressure-sensitive adhesive layer between two release films was prepared in the same manner as in Example 1, except that the thermal-expandable fine particle-containing pressure-sensitive adhesive composition C was used in place of the thermal-expandable fine particle-containing pressure-sensitive adhesive composition A.
Solvent-insoluble content in the thermal-expandable fine particle-containing pressure-sensitive adhesive layer was 66% by weight.

(Example 4)

A double-coated pressure-sensitive adhesive sheet having the thermal-expandable fine particle-containing pressure-sensitive adhesive layer between two release films was prepared in the same manner as in Example 1, except that the thermal-expandable fine particle-containing pressure-sensitive adhesive composition D was used in place of the thermal-expandable fine particle-containing pressure-sensitive adhesive composition A.
Solvent-insoluble content in the thermal-expandable fine particle-containing pressure-sensitive adhesive layer was 77% by weight.

(Example 5)

A double-coated pressure-sensitive adhesive sheet having the thermal-expandable fine particle-containing pressure-sensitive adhesive layer between two release films was prepared in the same manner as in Example 1, except that the thermal-expandable fine particle-containing pressure-sensitive adhesive composition H was used in place of the thermal-expandable fine particle-containing pressure-sensitive adhesive composition A.
Solvent-insoluble content in the thermal-expandable fine particle-containing pressure-sensitive adhesive layer was 76% by weight.

(Example 6)

A double-coated pressure-sensitive adhesive sheet having the thermal-expandable fine particle-containing pressure-sensitive adhesive layer between two release films was prepared in the same manner as in Example 1, except that the thermal-expandable fine particle-containing pressure-sensitive adhesive composition I was used in place of the thermal-expandable fine particle-containing pressure-sensitive adhesive composition A.
Solvent-insoluble content in the thermal-expandable fine particle-containing pressure-sensitive adhesive layer was 79% by weight.

(Example 7)

A double-coated pressure-sensitive adhesive sheet having the thermal-expandable fine particle-containing pressure-sensitive adhesive layer between two release films was prepared in the same manner as in Example 1, except that the thermal-expandable fine particle-containing pressure-sensitive adhesive composition J was used in place of the thermal-expandable fine particle-containing pressure-sensitive adhesive composition A.
Solvent-insoluble content in the thermal-expandable fine particle-containing pressure-sensitive adhesive layer was 75% by weight.

(Example 8)

A double-coated pressure-sensitive adhesive sheet having the thermal-expandable fine particle-containing pressure-sensitive adhesive layer between two release films was prepared in the same manner as in Example 1, except that the thermal-expandable fine particle-containing pressure-sensitive adhesive composition K was used in place of the thermal-expandable fine particle-containing pressure-sensitive adhesive composition A.
Solvent-insoluble content in the thermal-expandable fine particle-containing pressure-sensitive adhesive layer was 77% by weight.

(Example 9)

A double-coated pressure-sensitive adhesive sheet having the thermal-expandable fine particle-containing pressure-sensitive adhesive layer between two release films was prepared in the same manner as in Example 1, except that the thermal-expandable fine particle-containing pressure-sensitive adhesive composition L was used in place of the thermal-expandable fine particle-containing pressure-sensitive adhesive composition A.
Solvent-insoluble content in the thermal-expandable fine particle-containing pressure-sensitive adhesive layer was 8 1% by weight.

(Example 10)

A double-coated pressure-sensitive adhesive sheet having the thermal-expandable fine particle-containing pressure-sensitive adhesive layer between two release films was prepared in the same manner as in Example 1, except that the thermal-expandable fine particle-containing pressure-sensitive adhesive composition M was used in place of the thermal-expandable fine particle-containing pressure-sensitive adhesive composition A.
Solvent-insoluble content in the thermal-expandable fine particle-containing pressure-sensitive adhesive layer was 84% by weight.

(Example 11)

A double-coated pressure-sensitive adhesive sheet having the thermal-expandable fine particle-containing pressure-sensitive adhesive layer between two release films was prepared in the same manner as in Example 1, except that the thermal-expandable fine particle-containing pressure-sensitive adhesive composition N was used in place of the thermal-expandable fine particle-containing pressure-sensitive adhesive composition A.
Solvent-insoluble content in the thermal-expandable fine particle-containing pressure-sensitive adhesive layer was 76% by weight.

(Example 12)

A double-coated pressure-sensitive adhesive sheet having the thermal-expandable fine particle-containing pressure-sensitive adhesive layer between two release films was prepared in the same manner as in Example 1, except that the thermal-expandable fine particle-containing pressure-sensitive adhesive composition O was used in place of the thermal-expandable fine particle-containing pressure-sensitive adhesive composition A.
Solvent-insoluble content in the thermal-expandable fine particle-containing pressure-sensitive adhesive layer was 78% by weight.

(Example 13)

A double-coated pressure-sensitive adhesive sheet having the thermal-expandable fine particle-containing pressure-sensitive adhesive layer between two release films was prepared in the same manner as in Example 1, except that the thermal-expandable fine particle-containing pressure-sensitive adhesive composition P was used in place of the thermal-expandable fine particle-containing pressure-sensitive adhesive composition A.
Solvent-insoluble content in the thermal-expandable fine particle-containing pressure-sensitive adhesive layer was 93% by weight.

(Example 14)

A double-coated pressure-sensitive adhesive sheet having the thermal-expandable fine particle-containing pressure-sensitive adhesive layer between two release films was prepared in the same manner as in Example 1, except

that the thermal-expandable fine particle-containing pressure-sensitive adhesive composition Q was used in place of the thermal-expandable fine particle-containing pressure-sensitive adhesive composition A.
Solvent-insoluble content in the thermal-expandable fine particle-containing pressure-sensitive adhesive layer was 93% by weight.

(Example 15)

A double-coated pressure-sensitive adhesive sheet having the thermal-expandable fine particle-containing pressure-sensitive adhesive layer between two release films (double-coated pressure-sensitive adhesive sheet having a laminate constitution of release film A/thermal-expandable fine particle-containing pressure-sensitive adhesive layer (thickness: 200 μm)/release film B) was prepared in the same manner as in Example 1, except that the thermal-expandable fine particle-containing pressure-sensitive adhesive layer was formed by using the thermal-expandable fine particle-containing pressure-sensitive adhesive composition D and applying so as to have a thickness of 200 μm.
Solvent-insoluble content in the thermal-expandable fine particle-containing pressure-sensitive adhesive layer was 77% by weight.

(Example 16)

A double-coated pressure-sensitive adhesive sheet having the thermal-expandable fine particle-containing pressure-sensitive adhesive layer between two release films (double-coated pressure-sensitive adhesive sheet having a laminate constitution of release film A/thermal-expandable fine particle-containing pressure-sensitive adhesive layer (thickness: 200 μm)/release film B) was prepared in the same manner as in Example 1, except that the thermal-expandable fine particle-containing pressure-sensitive adhesive layer was formed by using the thermal-expandable fine particle-containing pressure-sensitive adhesive composition K and applying so as to have a thickness of 200 μm.
Solvent-insoluble content in the thermal-expandable fine particle-containing pressure-sensitive adhesive layer was 77% by weight.

(Example 17)

A double-coated pressure-sensitive adhesive sheet having the thermal-expandable fine particle-containing pressure-sensitive adhesive layer between two release films (double-coated pressure-sensitive adhesive sheet having a laminate constitution of release film A/thermal-expandable fine particle-containing pressure-sensitive adhesive layer (thickness: 200 μm)/release film B) was prepared in the same manner as in Example 1, except that the thermal-expandable fine particle-containing pressure-sensitive adhesive layer was formed by using the thermal-expandable fine particle-containing pressure-sensitive adhesive composition M and applying so as to have a thickness of 200 μm.
Solvent-insoluble content in the thermal-expandable fine particle-containing pressure-sensitive adhesive layer was 84% by weight.

(Example 18)

A double-coated pressure-sensitive adhesive sheet having the thermal-expandable fine particle-containing pressure-sensitive adhesive layer between two release films (double-coated pressure-sensitive adhesive sheet having a laminate constitution of release film A/thermal-expandable fine particles-containing pressure-sensitive adhesive layer (thickness: 200 μm)/release film B) was prepared in the same manner as in Example I, except that the thermal-expandable fine particle-containing pressure-sensitive adhesive layer was formed by using the thermal-expandable fine particle-containing pressure-sensitive adhesive composition O and applying so as to have a thickness of 200 μm.
Solvent-insoluble content in the thermal-expandable fine particle-containing pressure-sensitive adhesive layer was 78% by weight.

(Example 19)

A double-coated pressure-sensitive adhesive sheet having the thermal-expandable fine particle-containing pressure-sensitive adhesive layer between two release films (double-coated pressure-sensitive adhesive sheet having a laminate constitution of release film A/thermal-expandable fine particle-containing pressure-sensitive adhesive layer (thickness: 200 μm)/release film B) was prepared in the same manner as in Example 1, except that the thermal-expandable fine particle-containing pressure-sensitive adhesive layer was formed by using the thermal-expandable fine particle-containing pressure-sensitive adhesive composition Q and applying so as to have a thickness of 200 μm.
Solvent-insoluble content in the thermal-expandable fine particle-containing pressure-sensitive adhesive layer was 95%

by weight.

(Comparative Example 1)

A double-coated pressure-sensitive adhesive sheet having the thermal-expandable fine particle-containing pressure-sensitive adhesive layer between two release films was prepared in the same manner as in Example 1, except that the thermal-expandable fine particle-containing pressure-sensitive adhesive composition E was used in place of the thermal-expandable fine particle-containing pressure-sensitive adhesive composition A.
Solvent-insoluble content in the thermal-expandable fine particle-containing pressure-sensitive adhesive layer was 86% by weight.

(Comparative Example 2)

A double-coated pressure-sensitive adhesive sheet having the thermal-expandable fine particle-containing pressure-sensitive adhesive layer between two release films was prepared in the same manner as in Example 1, except that the thermal-expandable fine particle-containing pressure-sensitive adhesive composition F was used in place of the thermal-expandable fine particle-containing pressure-sensitive adhesive composition A.
Solvent-insoluble content in the thermal-expandable fine particle-containing pressure-sensitive adhesive layer was 63% by weight.

(Comparative Example 3)

A double-coated pressure-sensitive adhesive sheet having the thermal-expandable fine particle-containing pressure-sensitive adhesive layer between two release films was prepared in the same manner as in Example 1, except that the thermal-expandable fine particle-containing pressure-sensitive adhesive composition G was used in place of the thermal-expandable fine particle-containing pressure-sensitive adhesive composition A.
Solvent-insoluble content in the thermal-expandable fine particle-containing pressure-sensitive adhesive layer was 80% by weight.

(Comparative Example 4)

A double-coated pressure-sensitive adhesive sheet having the thermal-expandable fine particle-containing pressure-sensitive adhesive layer between two release films (double-coated pressure-sensitive adhesive sheet having a laminate constitution of release film A/thermal-expandable fine particle-containing pressure-sensitive adhesive layer (thickness: 200 μm)/release film B) was prepared in the same manner as in Example 1, except that the thermal-expandable fine particle-containing pressure-sensitive adhesive layer was formed by using the thermal-expandable fine particle-containing pressure-sensitive adhesive composition E and applying so as to have a thickness of 200 μm.
Solvent-insoluble content in the thermal-expandable fine particle-containing pressure-sensitive adhesive layer was 86% by weight.

(Evaluation)

The sheets prepared in Examples and Comparative Examples were evaluated as follows. The results obtained are shown in Tables 6 and 7.

(Preparation Example I of Sample for Measurement)

A polyethylene terephthalate film (PET film, thickness: 50 μm, the surface is not release-treated, trade name: LUMIRROR S-10 #50, manufactured by Toray Industries, Inc.) was attached to a pressure-sensitive adhesive surface obtained by peeling the release film A from each double-coated pressure-sensitive adhesive sheet prepared in Examples 1 to 14 and Comparative Examples 1 to 3. The resulting laminate was cut into a width of 25 mm and a length of 50 mm. Thus, a pressure-sensitive adhesive sheet having PET film as a support was obtained as a sample 1 for measurement. The sample 1 for measurement has a strip shape having a width of 25 mm and a length of 50 mm, and has a layer constitution of release film B/pressure-sensitive adhesive layer/PET film.

(Preparation Example 2 of Sample for Measurement)

Each of the double-coated pressure-sensitive adhesive sheets prepared in Examples 15 to 19 and Comparative

Example 4 was cut into a width of 25 mm and a length of 50 mm, thereby obtaining a pressure-sensitive adhesive sheet (baseless pressure-sensitive adhesive sheet consisting of the pressure-sensitive adhesive layer) as a sample 2 for measurement. The sample 2 for measurement has a strip shape having a width of 25 mm and a length of 50 mm, and has a layer constitution of release film A/pressure-sensitive adhesive layer/release film B.

(Evaluation of Initial Adhesive Force and Adhesive Force)

A 304 BA stainless steel plate (SUS304BA plate) was cleaned by rubbing 10 times reciprocating with a clean waste impregnated with isopropyl alcohol to obtain a clean 304 BA stainless steel plate.
The sample 1 for measurement in which the release film B had been peeled off to expose the pressure-sensitive adhesive surface was pressure bonded to the clean 304 BA stainless steel plate in an atmosphere of 23°C by reciprocating one time with a 2 kg roller to thereby adhere the sample 1 for measurement to the 304 BA stainless steel plate. The resulting assembly was aged.
This aging is an aging treatment in an atmosphere of 23°C for 30 minutes in the case of evaluating initial adhesive force. On the other hand, this aging is an aging treatment in an atmosphere of 40°C for 48 hours in the case of evaluating adhesive force.
After the aging, the sample 1 for measurement was peeled off from the 304 BA stainless steel plate at a tension rate of 300 mm/min in 180° peeling direction using a tensile tester (model name: Tensile and Compression Testing Machine TG-1kN, manufactured by Minebeya Co., Ltd.) in an atmosphere of 23°C, to thereby measure 180° peeling adhesive strength.
The case that the 180° peeling adhesive strength is 12 N/25 mm or more was evaluated as "Good", and the case that the 180° peeling adhesive strength is less than 12 N/25 mm was evaluated as "Poor".

(Evaluation I of Heat Dismantlability)

A 304 BA stainless steel plate (SUS304BA plate) was cleaned by rubbing 10 times reciprocating with a clean waste impregnated with isopropyl alcohol to obtain a clean 304 BA stainless steel plate.
The sample 1 for measurement in which the release film B had been peeled off to expose the pressure-sensitive adhesive surface was pressure bonded to the clean 304 BA stainless steel plate in an atmosphere of 23°C by reciprocating one time with a 2 kg roller, to thereby adhere the sample 1 for measurement to the 304 BA stainless steel plate. The resulting assembly was aged at 23°C for 30 minutes to obtain a sample for evaluation of heat dismantlability.
The sample for evaluation of heat dismantlability was introduced in a hot air dryer while maintaining the state that the sample I for measurement was adhered to the 304BA stainless plate, and was heat-treated at 130°C for 10 minutes.
The condition of the sample for evaluation of heat dismantlability after completion of the heat treatment was confirmed, and heat dismantlability was evaluated by the following standards.
Good: Case that sample 1 for measurement has been peeled off from 304BA stainless steel plate, or case that sample 1 for measurement can easily be peeled off from 304BA stainless steel plate
Poor: Case that sample I for measurement cannot easily be peeled off from 304BA stainless steel plate
The results of the evaluation 1 of heat dismantlability are shown in the column of "23°C×30 min" ofheat dismantlability in Table 6.

(Evaluation 2 of Heat Dismantlability)

A 304 BA stainless steel plate (SUS304BA plate) was cleaned by rubbing 10 times reciprocating with a clean waste impregnated with isopropyl alcohol to obtain a clean 304 BA stainless steel plate.
The sample 1 for measurement in which the release film B had been peeled off to expose the pressure-sensitive adhesive surface was pressure bonded to the clean 304 BA stainless steel plate in an atmosphere of 23°C by reciprocating one time with a 2 kg roller, to thereby adhere the sample 1 for measurement to the 304 BA stainless steel plate. The resulting assembly was aged at 85°C for 1 week and then allowed to stand at 23°C for 24 hours to obtain a sample for evaluation of heat dismantlability.
The sample I for evaluation of heat dismantlability introduced in a hot air dryer while maintaining the state that the sample 1 for measurement was adhered to the 304BA stainless plate, and was heat-treated at 130°C for 10 minutes.
The state of the sample for evaluation of heat dismantlability after completion of the heat treatment was confirmed, and heat dismantlability was evaluated by the following standards.
Good: Case that sample I for measurement has been peeled off from 304BA stainless steel plate, or case that sample 1 for measurement can easily be peeled off from 304BA stainless steel plate
Poor: Case that sample 1 for measurement cannot easily be peeled off from 304BA stainless steel plate
The results of the evaluation 2 of heat dismantlability are shown in the column of "85°C×1 week" of heat dismantlability

Table 6.

(Evaluation 3 of Heat Dismantlability) (Double Side Dismantlability Test)

Two aluminum plates (thickness: 0.4 mm) were cleaned by rubbing 10 times reciprocating with a clean waste impregnated with isopropyl alcohol to obtain two clean aluminum plates.
The sample 2 for measurement in which the release film B had been peeled off to expose the pressure-sensitive adhesive surface was pressure bonded to one clean aluminum plate in an atmosphere of 23°C atmosphere by reciprocating one time with a 2 kg roller, to adhere the sample 2 for measurement to the clean aluminum plate. The sample 2 for measurement adhered to the clean aluminum plate in which the release film A had been peeled to expose the pressure-sensitive adhesive surface was pressure bonded to another clean aluminum plate in an atmosphere of 23°C atmosphere by reciprocating one time with a 2 kg roller, to adhere the sample 2 for measurement to the another clean aluminum plate.
The resulting assembly was aged at 23°C for 30 minutes, thereby obtaining a sample for evaluation of heat dismantlability in which the two aluminum plates were adhered to each other through the sample 2 for measurement.
The sample for evaluation of heat dismantlability was introduced in a hot air dryer while maintaining the state that the two aluminum plates were adhered to each other through the sample 2 for measurement, and was heat-treated at 130°C for 10 minutes.
The condition of the sample for evaluation of heat dismantlability after completion of the heat treatment was confirmed, and heat dismantlability was evaluated by the following standards.
Good: Case that two aluminum plates have been dismantled to each other, or case that two aluminum plates can easily be dismantled to each other
Poor: Case that two aluminum plates cannot easily be dismantled to each other
The results of the evaluation 3 of heat dismantlability are shown in the column of "23°C×30 minutes" of heat dismantlability in Table 7.

(Evaluation of Repelling Resistance)

Each of the pressure-sensitive adhesive sheets prepared in Examples and Comparative Examples was cut into a size having a width of 10 mm and a length of 90 mm. The release film A was peeled off from the pressure-sensitive adhesive sheet, and the pressure-sensitive adhesive sheet was adhered to an aluminum plate having the same size (aluminum plate having a size of width of 10 mm and length of 90 mm, and having a thickness of 0.4 mm) to obtain a sample for repelling resistance test. The samples for repelling resistance test are a laminate of the aluminum plate and the pressure-sensitive adhesive sheet, and have a layer constitution of release film B/ pressure-sensitive adhesive layer/ aluminum plate.
Each of the samples for repelling resistance test was bent at the curvature of R50, that is, bent along the circumference of a circle having a radius of 20 mm, in such a manner that the pressure-sensitive adhesive sheet side (surface side provided by release film B) faces outward.
After bending, the release film B was peeled off from the sample for repelling resistance test to expose the pressure-sensitive adhesive surface. The sample for repelling resistance test having the exposed pressure-sensitive adhesive surface was adhered by pressure bonding to an acrylic plate (transparent, trade name: ACRYLITE, manufactured by Mitsubishi Rayon Co., Ltd.) using a laminator so as not to form floating.
The sample for repelling resistance test, adhered to the acrylic plate was allowed to stand at room temperature (23°C) for 7 hours. Floating distance (distance floated) from the acrylic plate at both ends (both ends in a length direction) of the sample for repelling resistance test was measured, and its average value was obtained. The average value was taken as "floating distance".
The case that the floating distance was less than 10 mm was evaluated as "Good", and the case that the floating distance was 10 mm or more was evaluated as "Poor".

TABLE 6

| | Initial adhesive force | | Adhesive force | | Heat dismantlability | | Repelling resistance | |
|---|---|---|---|---|---|---|---|---|
| | 180° Peeling adhesive strength (N/25 mm) | Evaluation | 180° Peeling adhesive strength (N/25 mm) | Evaluation | 23°C ×30 min | 85°C ×1 week | Floating distance (mm) | Evaluation |
| Example 1 | 18.1 | Good | 28.4 | Good | Good | Poor | 0.0 | Good |
| Example 2 | 16.1 | Good | 18.0 | Good | Good | Poor | 0.0 | Good |
| Example 3 | 18.6 | Good | 22.5 | Good | Good | Poor | 0.0 | Good |
| Example 4 | 19.5 | Good | 24.7 | Good | Good | Good | 0.4 | Good |
| Example 5 | 13.8 | Good | 18.6 | Good | Good | Poor | 5.0 | Good |
| Example 6 | 16.3 | Good | 23.8 | Good | Good | Poor | 1.0 | Good |
| Example 7 | 15.0 | Good | 22.1 | Good | Good | Poor | 0.8 | Good |
| Example 8 | 16.8 | Good | 15.6 | Good | Good | Good | 0.0 | Good |
| Example 9 | 16.6 | Good | 29.8 | Good | Good | Good | 1.8 | Good |
| Example 10 | 15.3 | Good | 24.5 | Good | Good | Good | 2.0 | Good |
| Example 11 | 17.8 | Good | 24.0 | Good | Good | Poor | 0.0 | Good |
| Example 12 | 16.4 | Good | 23.3 | Good | Good | Poor | 0.0 | Good |
| Example 13 | 18.5 | Good | 24.7 | Good | Good | Poor | 0.3 | Good |
| Example 14 | 14.2 | Good | 22.1 | Good | Good | Poor | 0.0 | Good |
| Comp. Example 1 | 18.1 | Good | 31.2 | Good | Poor | Poor | 14.0 | Poor |
| Comp. Example 2 | 11.0 | Poor | 16.3 | Good | Poor | Poor | 0.3 | Good |
| Comp. Example 3 | 5.5 | Poor | 5.0 | Poor | Good | Good | 0.0 | Good |

TABLE 7

| | Heat dismantlability |
|---|---|
| | 23°C×30 minutes |
| Example 15 | Good |
| Example 16 | Good |
| Example 17 | Good |
| Example 18 | Good |
| Example 19 | Good |
| Comp. Example 4 | Poor |

The pressure-sensitive adhesive sheets prepared in Examples showed good initial adhesive force, adhesive force and adhesion reliability (particularly, repelling resistance) to adherends, and could easily be peeled off (dismantled) by heating. Therefore, these sheets can be used in rework and recycle uses.

The pressure-sensitive adhesive sheet prepared in Comparative Example 1 showed good initial adhesive force and adhesive force, but was poor in adhesion reliability, and could not be peeled off by heating. The pressure-sensitive adhesive sheet prepared in Comparative Example 2 showed good adhesive force and adhesion reliability, but could not be peeled off by heating. The pressure-sensitive adhesive sheet prepared in Comparative Example 3 showed good adhesion reliability and could easily be peeled off, but was poor in initial adhesive force and adhesive force.

In the pressure-sensitive adhesive sheets prepared in Examples, the 180° peeling adhesive strength was increased with the passage of time, but was the problem-free range on practical use. On the other hand, in the pressure-sensitive adhesive sheet prepared in Comparative Example 1, the 180° peeling adhesive strength was increased to a level causing the practical problem with the passage of time.

## Claims

**1.** A pressure-sensitive adhesive composition comprising: a monomer mixture comprising the following (a1), (a2) and (a3) or partially polymerized product thereof; and thermal-expandable fine particles:

(a1): alkyl (meth)acrylate monomer having 4 to 12 carbon atoms in its alkyl moiety and having a glass transition temperature when formed into a homopolymer of lower than 0°C;
(a2): monomer having at least one nitrogen atom and one ethylenically unsaturated bond in its molecule; and
(a3): monomer having one ethylenically unsaturated bond in its molecule and having a glass transition temperature when formed into a homopolymer of 0°C or higher (excluding (a2) above).

**2.** The pressure-sensitive adhesive composition according to claim 1, wherein in the monomer mixture, the content of the (a1) is 50 to 80% by weight, the content of the (a2) is 5 to 40% by weight, and the content of the (a3) is 5 to 40% by weight, based on the total weight (100% by weight) of (a1), (a2) and (a3).

**3.** The pressure-sensitive adhesive composition according to claim 1 or 2, wherein the (a2) is at least one monomer selected from the group consisting of dimethyl acrylamide, N-vinyl pyrrolidone and N-vinyl caprolactam.

**4.** The pressure-sensitive adhesive composition according to any one of claims 1 to 3, wherein the (a3) is a (meth) acrylate monomer having a glass transition temperature when formed into a homopolymer of 0°C or higher and having a structure that a (meth)acryloyloxy group is bonded with a tertiary carbon atom; or a (meth)acrylate monomer having a glass transition temperature when formed into a homopolymer of 0°C or higher and having a structure that a (meth)acryloyloxy group is bonded with a carbon atom constituting a ring of a monocyclic or polycyclic alicyclic hydrocarbon.

**5.** The pressure-sensitive adhesive composition according to any one of claims 1 to 4, wherein the (a3) is at least one monomer selected from the group consisting of tert-butyl (meth)acrylate, cyclohexyl (meth)acrylate, isobornyl (meth) acrylate, 1,4-cyclohexanedimethanol mono(meth)acrylate and dicyclopentanyl (meth)acrylate.

**6.** The pressure-sensitive adhesive composition according to any one of claims 1 to 5, wherein the monomer mixture

contains a carboxyl group-containing monomer in 0.1 parts by weight or less per 100 parts by weight of the total amount of the monomer components.

**7.** The pressure-sensitive adhesive composition according to any one of claims 1 to 6, further comprising a monomer having at least two ethylenically unsaturated bonds in its molecule.

**8.** A pressure-sensitive adhesive layer formed from the pressure-sensitive adhesive composition according to any one of claims 1 to 7.

**9.** A pressure-sensitive adhesive tape or sheet comprising the pressure-sensitive adhesive layer according to claim 8.

## Patentansprüche

**1.** Haftkleberzusammensetzung, umfassend: ein Monomergemisch, umfassend die folgenden (a1), (a2) und (a3), oder ein teilweise polymerisiertes Produkt derselben; und thermisch expandierbare Feinpartikel:

(a1): ein Alkyl(meth)acrylat-Monomer mit 4 bis 12 Kohlenstoffatomen in seiner Alkyleinheit und mit einer Glasübergangstemperatur von weniger als 0°C, wenn daraus ein Homopolymer bebildet wird;
(a2): ein Monomer mit mindestens einem Stickstoffatom und einer ethylenisch ungesättigten Bindung in seinem Molekül; und
(a3): ein Monomer mit einer ethylenisch ungesättigten Bindung in seinem Molekül und mit einer Glasübergangstemperatur von 0°C oder höher, wenn daraus ein Homopolymer bebildet wird (ohne (a2) oben).

**2.** Die Haftkleberzusammensetzung gemäß Anspruch 1, wobei in dem Monomergemisch der Gehalt an (a1) 50 bis 80 Gew.%, der Gehalt an (a2) 5 bis 40 Gew.%, und der Gehalt an (a3) 5 bis 40 Gew.% beträgt, bezogen auf das Gesamtgewicht (100 Gew.%) an (a1), (a2) und (a3).

**3.** Die Haftkleberzusammensetzung gemäß Anspruch 1 oder 2, wobei (a2) mindestens ein Monomer ist, ausgewählt aus der Gruppe bestehend aus Dimethylacrylamid, N-Vinylpyrrolidon und N-Vinylcaprolactam.

**4.** Die Haftkleberzusammensetzung gemäß einem der Ansprüche 1 bis 3, wobei (a3) ein (Meth)acrylat-Monomer mit einer Glasübergangstemperatur von 0°C or höher ist, wenn daraus ein Homopolymer bebildet wird, und mit einer Struktur, wobei eine (Meth)acryloyloxygruppe mit einem tertiären Kohlenstoffatom verbunden ist; oder ein (Meth) acrylat-Monomer mit einer Glasübergangstemperatur von 0°C or höher ist, wenn daraus ein Homopolymer bebildet wird, und mit einer Struktur, wobei eine (Meth)acryloyloxygruppe mit einem Kohlenstoffatom verbunden ist, das einen Ring eines mono- oder polycyclischen alicyclischen Kohlenwasserstoffs erzeugt.

**5.** Die Haftkleberzusammensetzung gemäß einem der Ansprüche 1 bis 4, wobei (a3) mindestens ein Monomer, ausgewählt aus der Gruppe bestehend aus tert-Butyl(meth)acrylat, Cyclohexyl(meth)acrylat, Isobornyl(meth)acrylat, 1,4-Cyclohexandimethanol-mono(meth)acrylat und Dicyclopentanyl(meth)acrylat ist.

**6.** Die Haftkleberzusammensetzung gemäß einem der Ansprüche 1 bis 5, wobei die Monomermischung ein eine Carboxylgruppe enthaltendes Monomer in 0.1 Gewichtsteilen oder weniger pro 100 Gewichtsteilen der Gesamtmenge der Monomerkomponenten enthält.

**7.** Die Haftkleberzusammensetzung gemäß einem der Ansprüche 1 bis 6, weiterhin umfassend ein Monomer mit mindestens zwei ethylenisch ungesättigten Bindungen in seinem Molekül.

**8.** Haftkleberschicht, die aus der Haftkleberzusammensetzung nach einem der Ansprüche 1 bis 7 gebildet ist.

**9.** Haftklebeband oder -Folie, umfassend die Haftkleberschicht nach Anspruch 8.

## Revendications

**1.** Composition adhésive autocollante comprenant : un mélange de monomères comprenant les (a1), (a2) et (a3) suivants ou leur produit partiellement polymérisé ; et de fines particules thermiquement expansibles :

(a1) : un monomère (méth)acrylate d'alkyle ayant 4 à 12 atomes de carbone dans sa partie alkyle et ayant une température de transition vitreuse en tant qu'homopolymère inférieure à 0°C ;
(a2) : un monomère ayant au moins un atome d'azote et une liaison éthyléniquement insaturée dans sa molécule ; et
(a3) : un monomère ayant une liaison éthyléniquement insaturée dans sa molécule et ayant une température de transition vitreuse en tant qu'homopolymère de 0°C ou plus (à l'exclusion de (a2) ci-dessus).

**2.** Composition adhésive autocollante selon la revendication 1, où dans le mélange de monomères, la teneur en (a1) est de 50 à 80% en poids, la teneur en (a2) est de 5 à 40% en poids, et la teneur en (a3) est de 5 à 40% en poids, sur base du poids total (100% en poids) de (a1), (a2) et (a3).

**3.** Composition adhésive autocollante selon la revendication 1 ou 2, où (a2) est au moins un monomère choisi parmi le groupe consistant en le diméthylacrylamide, la N-vinylpyrrolidone et le N-vinyl-caprolactame.

**4.** Composition adhésive autocollante selon l'une quelconque des revendications 1 à 3, où (a3) est un monomère (méth)acrylate ayant une température de transition vitreuse en tant qu'homopolymère de 0°C ou plus et ayant une structure telle qu'un radical (méth)acryloyloxy est lié à un atome de carbone tertiaire; ou un monomère (méth) acrylate ayant une température de transition vitreuse en tant qu'homopolymère de 0°C ou plus et ayant une structure telle qu'un radical (méth)acryloyloxy est lié à un atome de carbone composant un cycle d'un hydrocarbure alicyclique, monocyclique ou polycyclique.

**5.** Composition adhésive autocollante selon l'une quelconque des revendications 1 à 4, où (a3) est au moins un monomère choisi parmi le groupe consistant en le (méth)acrylate de t-butyle, le (méth)acrylate de cyclohexyle, le (méth)acrylate d'isobornyle, le mono(méth)acrylate de 1,4-cyclohexanediméthanol et le (méth)acrylate de dicyclopentanyle.

**6.** Composition adhésive autocollante selon l'une quelconque des revendications 1 à 5, où le mélange de monomères contient un monomère contenant un radical carboxyle en la quantité de 0,1 partie en poids ou moins par 100 parties en poids de la quantité totale des composants monomères.

**7.** Composition adhésive autocollante selon l'une quelconque des revendications 1 à 6, comprenant en outre, un monomère ayant au moins deux liaisons éthyléniquement insaturées dans sa molécule.

**8.** Couche adhésive autocollante formée à partir de la composition adhésive autocollante selon l'une quelconque des revendications 1 à 7.

**9.** Ruban ou feuille adhésive autocollante comprenant la couche adhésive autocollante selon la revendication 8.

Fig. 1

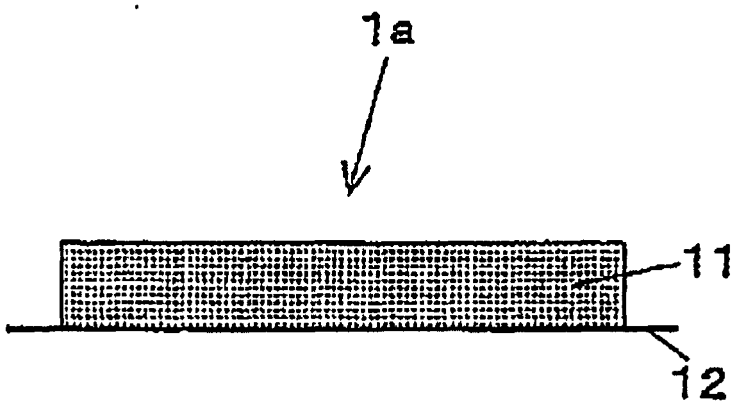


Fig. 2

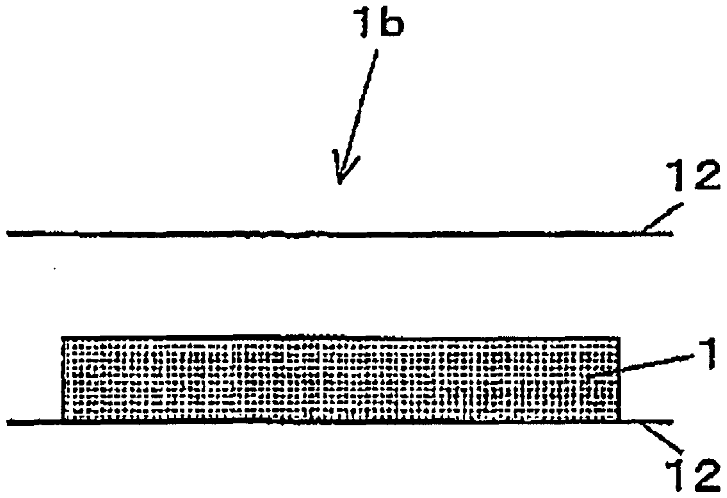

Fig. 3

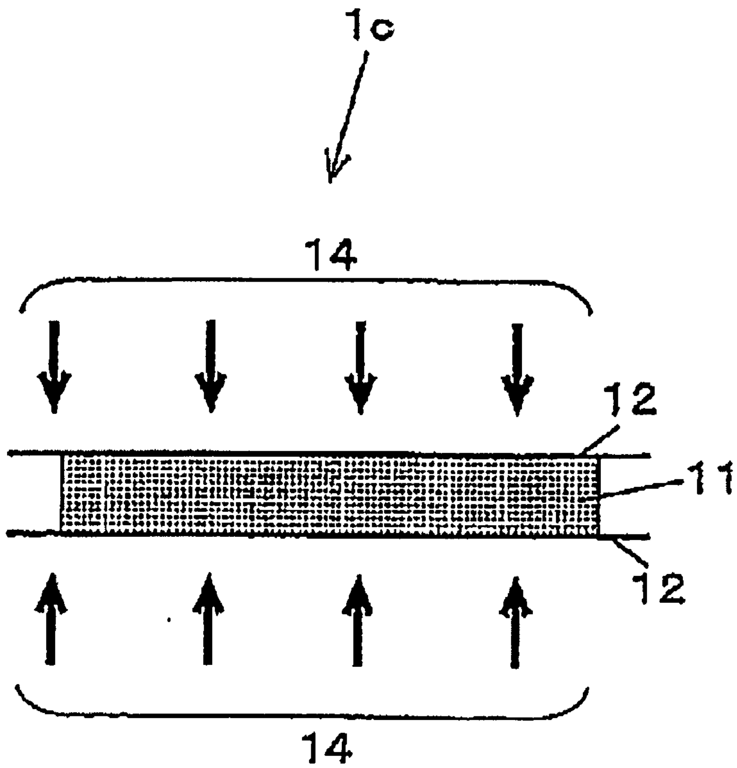


Fig. 4

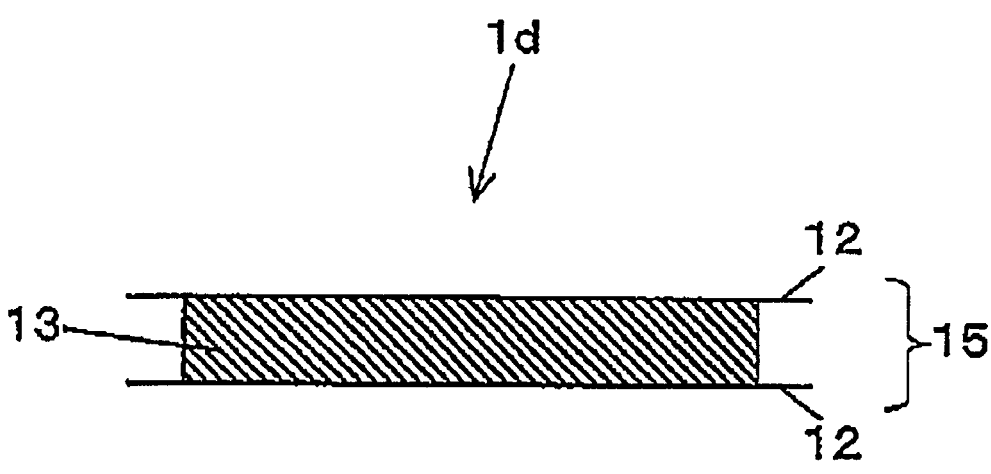

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006022189 A
- JP 2001247832 A
- EP 2204426 A1
- JP 2003013015 A

### Non-patent literature cited in the description

- Polymer Handbook. John Wiley & Sons, Inc, 1989